# EUROPEAN PATENT APPLICATION

(11) **EP 4 808 079 A1**
(43) Date of publication of application: **16.09.2026**
(21) Application number: 25775919.1
(22) Date of filing: 24.03.2025
(51) Int. Cl.: H04L 61/5076

(54) **DEVICE IDENTIFICATION METHOD AND SYSTEM, AND APPARATUS**

(30) Priority: 27.03.2024 CN 202410370642; 30.04.2024 CN 202410546864
(71) Applicant: Huawei Technologies Co., Ltd., Shenzhen, Guangdong 518129 (CN)
(72) Inventor: YANG, Chengjun, Shenzhen, Guangdong 518129 (CN); PENG, Jiang, Shenzhen, Guangdong 518129 (CN); ZHOU, Yangsheng, Shenzhen, Guangdong 518129 (CN)
(74) Representative: Huawei European IPR
(86) International application number: PCT/CN2025/084504
(87) International publication number: WO 2025/201268

(57) **Abstract**

This application provides a device identification method and system and an apparatus. In the system, power-sourcing equipment is connected to a powered device through a cable, and the cable includes two cable markers. In the method, the power-sourcing equipment or the powered device may separately send, to the two cable markers of the cable, an instruction used to modify a device address. A cable marker 1 in the cable may modify the device address from a device address 1 to a device address 2, and a cable marker 2 in the cable may modify the device address from the device address 1 to a device address 3. In this way, the power-sourcing equipment or the powered device identifies the two cable markers in the cable based on device addresses of the two cable markers.

## Description

This application claims priorities to Chinese Patent Application No. 202410370642.4, filed with the China National Intellectual Property Administration on March 27, 2024 and entitled "DEVICE IDENTIFICATION METHOD AND SYSTEM AND APPARATUS", and to Chinese Patent Application No. 202410546864.7, filed with the China National Intellectual Property Administration on April 30, 2024 and entitled "DEVICE IDENTIFICATION METHOD AND SYSTEM AND APPARATUS", both of which are incorporated herein by reference in their entireties.

### TECHNICAL FIELD

This application relates to the field of terminals and communication technologies, and in particular, to a device identification method and system and an apparatus.

### BACKGROUND

Currently, two electronic devices may be connected to each other through a cable to perform communication. For example, the two electronic devices connected to each other through the cable may be referred to as power-sourcing equipment and a powered device. A device that provides electric energy may be referred to as the power-sourcing equipment, and a device that receives electric energy may be referred to as the powered device. The power-sourcing equipment and the powered device are connected to each other through the cable, and the power-sourcing equipment and the powered device may communicate with each other through the cable. The power-sourcing equipment may also provide electric energy for the powered device through the cable. With development of electronic devices, cables also develop. Some cables have two cable markers, and each of two ends of the cable has one cable marker. In a scenario in which the power-sourcing equipment and the powered device are connected to each other through the cable having the two cable markers to perform communication, the power-sourcing equipment and the powered device need to have a function of identifying the two cable markers of the cable.

Therefore, in the scenario in which the power-sourcing equipment and the powered device are connected to each other through the cable having the two cable markers to perform communication, how the power-sourcing equipment and the powered device simply and correctly identify the two cable markers of the cable is an urgent problem to be resolved.

### SUMMARY

This application provides a device identification method and system and an apparatus. According to the device identification method provided in this application, when power-sourcing equipment and a powered device are connected to each other through a cable having two cable markers to perform communication, the power-sourcing equipment and the powered device can simply and correctly identify the two cable markers in the cable.

According to a first aspect, this application provides a device identification method. The method may be applied to a first device, and the first device may include a first power supply. The method may include: turning on the first power supply, where the first power supply is configured to supply power to a first electronic marker, and an address of the first electronic marker is a first address; sending first information, where the first information includes the first address and a second address, and the first information indicates the first electronic marker to modify the address of the first electronic marker from the first address to a second address; receiving second information, where the second information indicates that the address of the first electronic marker has been modified to the second address; sending third information to a second device, where the third information indicates the second device to supply power to a second electronic marker, and an address of the second electronic marker is the first address; receiving fourth information, where the fourth information indicates that the second device has supplied power to the second electronic marker; sending fifth information, where the fifth information includes the first address, and the fifth information is used to determine whether communication with the second electronic marker can be performed; and receiving sixth information, where the sixth information indicates that communication with the second electronic marker can be performed.

The first device is power-sourcing equipment or a powered device.

The first electronic marker and the second electronic marker are in the cable, and the cable is configured to connect the first device to the second device.

According to the method provided in the first aspect, the first device may indicate the first electronic marker to modify the address from the first address to the second address. In addition, the address of the second electronic marker is the first address. In this way, the address of the first electronic marker is different from the address of the second electronic marker. Therefore, the first device can identify the first electronic marker and the second electronic marker based on the address of the first electronic marker and the address of the second electronic marker.

With reference to the first aspect, in a possible implementation, after the receiving the sixth information, the method may further include: sending seventh information, where the seventh information includes the first address and a third address, and the seventh information indicates the second electronic marker to modify the address of the second electronic marker from the first address to the third address; and receiving eighth information, where the eighth information indicates that the address of the second electronic marker has been modified to the third address.

In this way, the first device can indicate the second electronic marker to modify the address to the third address. Therefore, the address of the second electronic marker is different from the address of the first electronic marker. In this way, the first device can identify the first electronic marker and the second electronic marker based on the address of the first electronic marker and the address of the second electronic marker.

With reference to the first aspect, in a possible implementation, that the third information indicates the second device to supply power to the second electronic marker may include: The third information indicates the second device to turn on a second power supply. In this way, the first device can indicate the second device to turn on the power supply to supply power to the second electronic marker.

With reference to the first aspect, in a possible implementation, after the receiving the second message, the method may further include: sending a ninth message, where the ninth message includes the second address, and the ninth message is used to determine whether communication with the first electronic marker can be performed; and receiving a tenth message, where the tenth message indicates that communication with the first electronic marker can be performed. In this way, the first device can determine that the address of the first electronic marker has been modified to the second address, and can communicate with the first electronic marker.

With reference to the first aspect, in a possible implementation, after the receiving the eighth message, the method may further include: sending an eleventh message, where the eleventh message includes the third address, and the eleventh message is used to determine whether communication with the second electronic marker can be performed; and receiving a twelfth message, where the twelfth message indicates that communication with the second electronic marker can be performed. In this way, after receiving the twelfth message, the first device can determine that the address of the second electronic marker has been modified to the third address, and can communicate with the second electronic marker.

With reference to the first aspect, in a possible implementation, after the turning on the first power supply, the method may further include: sending a thirteenth message, where the thirteenth message includes the first address, and the thirteenth message is used to determine whether communication with the first electronic marker can be performed; and receiving a fourteenth message, where the fourteenth message indicates that communication with the first electronic marker can be performed. In this way, after turning on the first power supply to supply power to the first electronic marker, the first device can determine, by sending the thirteenth message and receiving the tenth message, that a cable marker exists in the cable and the cable marker can perform communication.

With reference to the first aspect, in a possible implementation, before the receiving the fourth information, the method may further include: receiving a fifteenth message, where the fifteenth message indicates that the second device agrees to supply power to the second electronic marker. In this way, the first device can learn, based on the fifteenth message, that the second device can supply power to the second electronic marker.

In this embodiment of this application, the first information may be a message 11. The second information may be a message 12. The third information may be a message 14. The fourth information may be a message 16. The fifth information may be a message 17. The sixth information may be an ACK sent by a cable marker 305 to a powered device 100 in step S1021. The seventh information may be a message 18. The eighth information may be a message 19. The ninth information may be a message 13, and the tenth information may be an ACK in step S1010. The eleventh information may be a message 20, and the twelfth information may be an ACK in step S1029. The thirteenth information may be a message 10, and the fourteenth information may be an ACK in step S1003. The fifteenth information may be a message 15.

Alternatively, the first information may be a message 22. The second information may be a message 23. The third information may be a message 25. The fourth information may be a message 27. The fifth information may be a message 28. The sixth information may be an ACK sent by a cable marker 306 to power-sourcing equipment 200 in step S1121. The seventh information may be a message 29. The eighth information may be a message 30. The ninth information may be a message 24, and the tenth information may be an ACK in step S1110. The eleventh information may be a message 31, and the twelfth information may be an ACK in step S1129. The thirteenth information may be a message 21, and the fourteenth information may be an ACK in step S1103. The fifteenth information may be a message 26.

According to a second aspect, a device identification system is provided. The system may include a first device, a second device, and a third device, where the first device and the second device are connected to each other via the third device, and the third device includes a first electronic marker and a second electronic marker;
the first device may be configured to turn on a first power supply, where the first power supply is configured to supply power to the first electronic marker, and an address of the first electronic marker is a first address;
the first device may be further configured to send first information, where the first information includes the first address and a second address, and the first information indicates the first electronic marker to modify the address of the first electronic marker from the first address to the second address;
the first electronic marker may be configured to: receive the first information, and modify the address of the first electronic marker from the first address to the second address;
the first electronic marker may be configured to: send second information, where the second information indicates that the address of the first electronic marker has been modified to the second address;
the first device may be configured to receive the second information;
the first device may be configured to send third information to the second device, where the third information indicates the second device to supply power to the second electronic marker, and an address of the second electronic marker is the first address;
the second device may be configured to receive the third information;
the second device may be configured to turn on a second power supply, where the second power supply is configured to supply power to the second electronic marker, and the address of the second electronic marker is the first address;
the second device may be configured to send fourth information, where the fourth information indicates that the second device has turned on the second power supply;
the first device may be configured to: receive the fourth information, and send fifth information, where the fifth message includes the first address, and the fifth information is used to determine whether communication with the second electronic marker can be performed;
the second electronic marker may be configured to: receive the fifth information, and send sixth information, where the sixth information indicates that communication with the second electronic marker can be performed; and
the first device may be configured to receive the sixth information.

The third device is a cable. The first device is a powered device, and the second device is power-sourcing equipment; or the first device is power-sourcing equipment, and the second device is a powered device.

According to the system provided in the second aspect, the first device may indicate the first electronic marker to modify the address from the first address to the second address. In addition, the address of the second electronic marker is the first address. In this way, the address of the first electronic marker is different from the address of the second electronic marker. Therefore, the first device can identify the first electronic marker and the second electronic marker based on the address of the first electronic marker and the address of the second electronic marker.

With reference to the second aspect, in a possible implementation, the first device may be further configured to: send seventh information after receiving the fourth message or after receiving the sixth message, where the seventh information includes the first address and a third address, and the seventh information indicates the second electronic marker to modify the address of the second electronic marker from the first address to the third address;
the second electronic marker may be further configured to: receive the seventh information, and modify the address of the second electronic marker from the first address to the third address;
the second electronic marker may be further configured to send eighth information, where the eighth information indicates that the address of the second electronic marker has been modified to the third address; and
the first device may be further configured to receive the eighth information.

In this way, the first device can indicate the second electronic marker to modify the address to the third address. Therefore, the address of the second electronic marker is different from the address of the first electronic marker. In this way, the first device can identify the first electronic marker and the second electronic marker based on the address of the first electronic marker and the address of the second electronic marker.

With reference to the second aspect, in a possible implementation, the first electronic marker may include a first power supply pin and a first configuration channel pin; and that the first power supply is configured to supply power to the first electronic marker may specifically include: The first power supply is configured to supply power to the first electronic marker via the first power supply pin; and
the first electronic marker may be further configured to receive the first information via the first configuration channel pin.

In this way, the first electronic marker can receive, via the first power supply pin, electric energy provided by the first power supply. The first electronic marker can receive, via the first configuration channel pin, information (or referred to as a message) sent by the first device.

With reference to the second aspect, in a possible implementation, the second electronic marker may include a second power supply pin and a second configuration channel pin; and that the second power supply is configured to supply power to the second electronic marker may specifically include: The second power supply is configured to supply power to the second electronic marker via the second power supply pin;
the second electronic marker may be configured to receive the fifth information via the second configuration channel pin.

In this way, the second electronic marker can receive, via the second power supply pin, electric energy provided by the second power supply. The second electronic marker can receive, via the second configuration channel pin, the information sent by the first device.

With reference to the second aspect, in a possible implementation, the first device may be configured to: send a ninth message after receiving the second message, where the ninth message includes the second address, and the ninth message is used to determine whether communication with the first electronic marker can be performed;
the first electronic marker may be configured to: receive the ninth message, and send a tenth message, where the tenth message indicates that communication with the first electronic marker can be performed; and
the first device may be configured to receive the tenth message.

In this way, the first device can determine that the address of the first electronic marker has been modified to the second address, and can communicate with the first electronic marker.

With reference to the second aspect, in a possible implementation, the first device may be further configured to: send an eleventh message after receiving the eighth message, where the eleventh message includes the third address, and the eleventh message is used to determine whether communication with the second electronic marker can be performed;
the second electronic marker may be further configured to: receive the eleventh message, and send a twelfth message, where the twelfth message indicates that communication with the second electronic marker can be performed; and
the first device may be further configured to receive the twelfth message.

In this way, after receiving the twelfth message, the first device can determine that the address of the second electronic marker has been modified to the third address, and can communicate with the second electronic marker.

With reference to the second aspect, in a possible implementation, the first device may be further configured to: send a thirteenth message after turning on the first power supply, where the thirteenth message includes the first address, and the thirteenth message is used to determine whether communication with the first electronic marker can be performed; and
the first electronic marker may be further configured to: receive the thirteenth message, and send a fourteenth message, where the fourteenth message indicates that communication with the first electronic marker can be performed.

In this way, after turning on the first power supply to supply power to the first electronic marker, the first device can determine, by sending the thirteenth message and receiving the tenth message, that a cable marker exists in the cable and the cable marker can perform communication.

With reference to the second aspect, in a possible implementation, the second device is configured to: send a fifteenth message before sending the fourth message, where the fifteenth message indicates that the second device agrees to supply power to the second electronic marker; and
the first device is configured to receive the fifteenth message.

In this way, the first device can learn, based on the fifteenth message, that the second device can supply power to the second electronic marker.

According to a third aspect, an electronic device is provided. The electronic device may include a processor and a memory. The memory is coupled to the processor, the memory is configured to store computer program code, and the computer program code includes computer instructions. When the processor executes the computer instructions, the electronic device is enabled to perform the method according to any possible implementation of the first aspect.

According to a fourth aspect, an electronic device is provided. The electronic device may include one or more functional modules, and the one or more functional modules are configured to perform the method according to any possible implementation of the first aspect.

According to a fifth aspect, a chip system is provided. The chip system is applied to an electronic device, the chip system includes one or more processors, and the processor is configured to invoke computer instructions, so that the electronic device performs the method according to any possible implementation of the first aspect.

According to a sixth aspect, a computer-readable storage medium is provided, including instructions. When the instructions are run on an electronic device, the electronic device is enabled to perform the method according to any possible implementation of the first aspect.

According to a seventh aspect, a computer program product is provided. The computer program product includes computer program/instructions. When the computer program/instructions runs/run on an electronic device, the electronic device is enabled to perform the method according to any possible implementation of the first aspect.

It may be understood that the electronic device provided in the third aspect, the electronic device provided in the fourth aspect, the chip system provided in the fifth aspect, the computer-readable storage medium provided in the sixth aspect, and the computer program product provided in the seventh aspect are all configured to perform the method provided in this application. Therefore, for beneficial effect that can be achieved, refer to beneficial effect in corresponding methods. Details are not described herein again.

### BRIEF DESCRIPTION OF DRAWINGS

FIG. 1 is a diagram of a system 10 according to an embodiment of this application;
FIG. 2 is a diagram of a structure and a connection manner of power-sourcing equipment 200, a cable 300, and a powered device 100 according to an embodiment of this application;
FIG. 3 shows a device identification method according to an embodiment of this application;
FIG. 4 shows a device identification method according to an embodiment of this application;
FIG. 5 is still another diagram of a structure and a connection manner of power-sourcing equipment 200, a cable 300, and a powered device 100 according to an embodiment of this application;
FIG. 6 shows a device identification method according to an embodiment of this application;
FIG. 7 shows a device identification method according to an embodiment of this application;
FIG. 8 is another diagram of a structure and a connection manner of power-sourcing equipment 200, a cable 300, and a powered device 100 according to an embodiment of this application;
FIG. 9 is another diagram of a structure and a connection manner of power-sourcing equipment 200, a cable 300, and a powered device 100 according to an embodiment of this application;
FIG. 10A to FIG. 10C show a device identification method according to an embodiment of this application;
FIG. 11A to FIG. 11C show a device identification method according to an embodiment of this application;
FIG. 12 is a diagram of a structure of an electronic device 1200 according to an embodiment of this application;
FIG. 13 is a diagram of a structure of a power-sourcing apparatus 1300 according to an embodiment of this application; and
FIG. 14 is a diagram of a structure of a powered apparatus 1400 according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are a part but not all of embodiments of this application. All other embodiments obtained by a person of ordinary skill in the art based on embodiments of this application without creative efforts shall fall within the protection scope of this application.

Terms used in the following embodiments of this application are merely intended to describe specific embodiments, but are not intended to limit this application. The terms "one", "a/an", "the", "foregoing", and "this" of singular forms used in this specification and the appended claims of this application are also intended to include plural forms, unless otherwise specified in the context clearly. The terms "first" and "second" are merely intended for a purpose of description, and shall not be understood as an indication or implication of relative importance or an implicit indication of a quantity of indicated technical features. Therefore, a feature limited by "first" or "second" may explicitly or implicitly include one or more such features. "First", "second", and the like are used to distinguish between different objects, but are not used to describe a specific order of the objects. For example, a first object and a second object are used to distinguish between different objects, but are not used to describe a specific order of the objects.

In the descriptions of embodiments of this application, unless otherwise specified, "a plurality of" means two or more than two. For example, a plurality of processing units refer to two or more processing units, and a plurality of systems refer to two or more systems.

In embodiments of this application, the word like "example" or "for example" is used to represent giving an example, an illustration, or a description. Any embodiment or involved scheme described as an "example" or "for example" in embodiments of this application should not be explained as being more preferred or having more advantages than another embodiment or design scheme. Exactly, use of the word like "example" or "for example" is intended to present a related concept in a specific manner.

The term "and/or" in this application describes only an association relationship for describing associated objects and represents that three relationships may exist. For example, A and/or B may represent the following three cases: Only A exists, both A and B exist, and only B exists.

A term "user interface (user interface, UI)" in the following embodiments of this application is a medium interface for interaction and information exchange between an application or an operating system and a user. The user interface implements conversion between an internal form of information and a form acceptable to the user. The user interface is source code written in a specific computer language like Java or an extensible markup language (extensible markup language, XML). Interface source code is parsed and rendered on an electronic device, and is finally presented as content that can be identified by the user. The user interface is usually represented in a form of a graphical user interface (graphical user interface, GUI), which is a user interface that is displayed in a graphical manner and that is related to computer operations. The user interface may be a visual interface element like a text, an icon, a button, a menu, a tab, a text box, a dialog box, a status bar, a navigation bar, or a widget that is displayed on a display of the electronic device.

First, a system 10 provided in an embodiment of this application is described. The system 10 may include a powered device 100, power-sourcing equipment 200, and a cable 300. The powered device 100 may be connected to the power-sourcing equipment 200 through the cable 300.

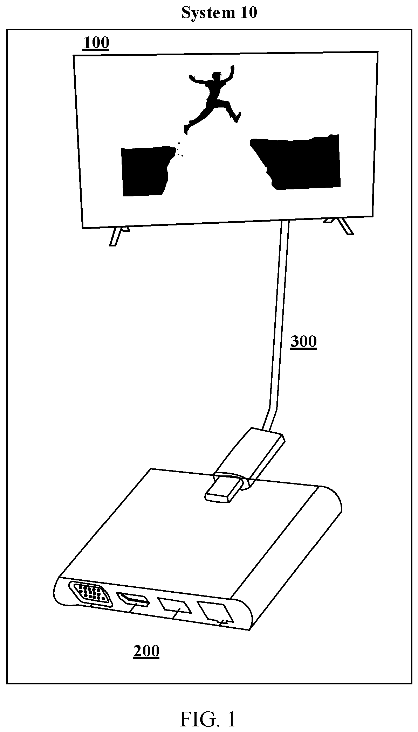

For example, the system 10 provided in this embodiment of this application may be shown in FIG. 1. The powered device 100 may be a smart screen device shown in FIG. 1, and the power-sourcing equipment 200 may be a dock (dock) shown in FIG. 1.

In this embodiment of this application, the powered device 100 may be a device with a rechargeable port. The powered device 100 is not limited to the smart screen device shown in FIG. 1. For example, the powered device 100 may alternatively be a device like a router, a camera, a mobile phone, a tablet, or a notebook computer. A specific type of the powered device 100 is not limited in embodiments of this application.

In this embodiment of this application, the power-sourcing equipment may be a device that has a power supply and that can supply power to another device. The power-sourcing equipment 200 is not limited to the dock shown in FIG. 1. For example, the power-sourcing equipment 200 may alternatively be a switch. A specific type of the power-sourcing equipment 200 is not limited in embodiments of this application.

In this embodiment of this application, the cable 300 has two cable markers. The cable 300 may include a data conducting wire and a power supply conducting wire. To be specific, the powered device 100 and the power-sourcing equipment 200 may transmit data through the cable 300, and may supply power through the cable 300. A specific composition material of the cable 300 and a specific structure of the cable 300 are not limited in embodiments of this application.

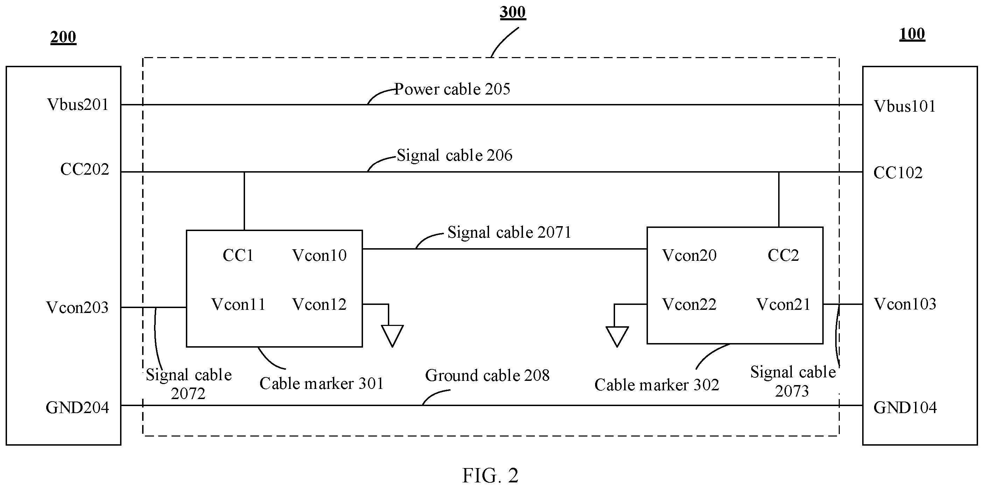

In some possible implementations, as shown in FIG. 2, the powered device (sink) 100 may include a pin Vbus101, a pin CC102, a pin Vcon103, and a pin GND104. A cable marker (cable marker) 301 may include a pin CC1, a pin Vcon10, a pin Vcon11, and a pin Vcon12. A cable marker (cable marker) 302 may include a pin CC2, a pin Vcon20, a pin Vcon21, and a pin Vcon22. The power-sourcing equipment (source) 200 may include a pin Vbus201, a pin CC202, a pin Vcon203, and a pin GND204.

The pin Vbus101 in the powered device 100 may be connected to the pin Vbus201 in the power-sourcing equipment 200 through a power cable 205 in the cable 300. The pin CC102 in the powered device 100 may be connected to the pin CC202 in the power-sourcing equipment 200 through a signal cable 206 in the cable 300. The pin GND104 in the powered device 100 may be connected to the pin GND204 in the power-sourcing equipment 200 through a ground cable 208 in the cable 300.

The pin Vcon11 in the cable marker 301 may be connected to the pin Vcon203 in the power-sourcing equipment 200 through a signal cable 2072. The pin Vcon10 in the cable marker 301 may be connected to the pin Vcon20 in the cable marker 302 through a signal cable 2071. The pin CC1 in the cable marker 301 may be connected to the signal cable 206, and the cable marker 301 may communicate with the powered device 100 and the power-sourcing equipment 200 through the signal cable 206.

The pin Vcon21 in the cable marker 302 may be connected to the pin Vcon103 in the powered device 100 through a signal cable 2073. The pin CC2 in the cable marker 302 may be connected to the signal cable 206, and the cable marker 302 may communicate with the powered device 100 and the power-sourcing equipment 200 through the signal cable 206.

It may be understood that names of the pins are merely examples, and the names of the pins are not limited in this application.

In some examples, the power cable 205 may be referred to as a power supply conducting wire, and the signal cable 206, the signal cable 2071, the signal cable 2072, and the signal cable 2073 may also be referred to as configuration channel connection lines, data conducting wires, or the like. Names of the power cable 205, the signal cable 206, the signal cable 2071, the signal cable 2072, and the signal cable 2073 are not limited in this application.

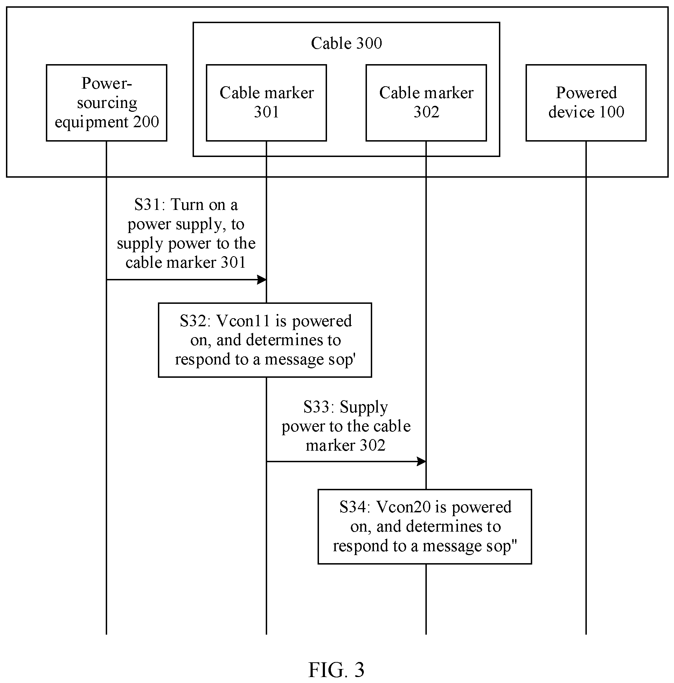

Based on the structures and connection manners of the powered device 100, the power-sourcing equipment 200, and the cable 300 shown in FIG. 2, FIG. 3 shows an existing device identification method. As shown in FIG. 3, before the power-sourcing equipment 200 communicates with the cable 300, the device identification method may include the following steps.

S31: The power-sourcing equipment 200 turns on a power supply, to supply power to the cable marker 301.

Refer to FIG. 2. The power-sourcing equipment 200 may include the pin Vcon203, and the pin Vcon203 is connected to the Vcon11 in the cable marker 301 through the power cable 205 of the cable 300. The power-sourcing equipment 200 may turn on the power supply, and then supply power to the cable marker 301 via the pin Vcon11.

S32: The Vcon11 in the cable marker 301 is powered on, and determines to respond to a message sop'.

The cable marker 301 may determine, based on a powered-on pin, to respond to a message sop' or a message sop" sent by the power-sourcing equipment 200. When the pin Vcon11 in the cable marker 301 is powered on, the cable marker 301 determines to respond to the message sop' sent by the power-sourcing equipment 200. When the pin Vcon10 in the cable marker 301 is powered on, the cable marker 301 determines to respond to the message sop" sent by the power-sourcing equipment 200.

The message sop' and the message sop" represent that start of pocket (start of pocket) messages may be classified into three types of messages: a message sop, a message sop', and a message sop". In a power delivery (power delivery, PD) protocol, a message for communication between a downstream facing port (downstream facing port, DFP) and a near-end cable marker may be referred to as the message sop', a message for communication between the DFP and a far-end cable marker may be referred to as the message sop", and a message for communication between the DFP and an upstream facing port (upstream facing port, UFP) may be referred to as the message sop.

In some examples, the DFP may also be referred to as a primary device port. In a system including power-sourcing equipment 200, a powered device 100, and a cable, a DFP may be a device that provides a power supply for the outside in the system. When the power-sourcing equipment 200 provides a power supply for the outside, the power-sourcing equipment 200 may be referred to as the DFP. When the powered device 100 provides a power supply for the outside, the powered device 100 may be referred to as the DFP.

In some examples, the UFP may be referred to as a secondary device port. In a system including power-sourcing equipment 200, a powered device 100, and a cable, a UFP may be a device that obtains a power supply in the system.

In this case, the power-sourcing equipment 200 serves as a DFP, and the power-sourcing equipment 200 may send a message sop', or may send a message sop".

Currently, the pin Vcon11 in the cable marker 301 is powered on. Therefore, the cable marker 301 may determine to respond to the message sop'.

S33: The cable marker 301 supplies power to the cable marker 302.

S34: The Vcon20 in the cable marker 302 is powered on, and determines to respond to the message sop".

The cable marker 301 may supply power to the cable marker 302 through a connection line between the pin Vcon10 and the pin Vcon20 in the cable marker 302. The cable marker 302 may determine, based on a powered-on pin, to respond to the message sop' or the message sop" sent by the power-sourcing equipment 200. When the pin Vcon21 in the cable marker 302 is powered on, the cable marker 302 determines to respond to the message sop' sent by the power-sourcing equipment 200. When the pin Vcon20 in the cable marker 302 is powered on, the cable marker 301 determines to respond to the message sop" sent by the power-sourcing equipment 200.

Currently, the pin Vcon20 in the cable marker 302 is powered on. Therefore, the cable marker 302 may determine to respond to the message sop".

In this way, when the power-sourcing equipment 200 sends the message sop' via the pin CC202, the cable marker 301 may respond to the message sop'. When the power-sourcing equipment 200 sends the message sop" via the pin CC202, the cable marker 302 may respond to the message sop".

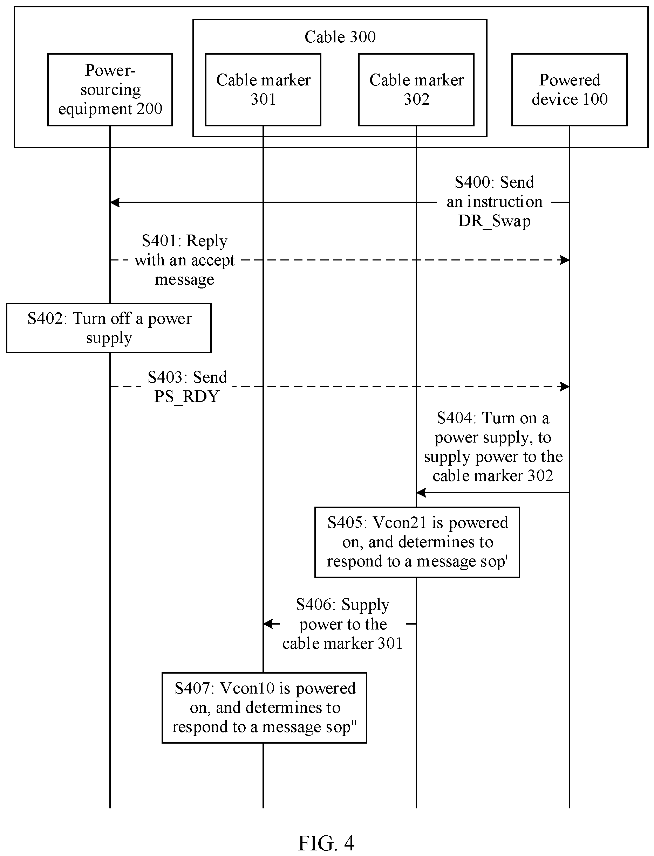

Based on the structures and connection manners of the powered device 100, the power-sourcing equipment 200, and the cable 300 shown in FIG. 2, FIG. 4 shows an existing device identification method. As shown in FIG. 4, before the powered device 100 communicates with the cable 300, the device identification method may include the following steps.

S400: The powered device 100 sends an instruction DR_Swap to the power-sourcing equipment 200.

The powered device 100 may send the instruction DR_Swap to the power-sourcing equipment 200. The instruction DR_Swap instructs the power-sourcing equipment 200 to agree that the powered device 100 switches from a UFP to a DFP.

S401: The power-sourcing equipment 200 replies with an accept message to the powered device 100.

The power-sourcing equipment 200 may reply with the accept message to the powered device 100. The accept message may indicate that the power-sourcing equipment 200 accepts and supports the instruction DR_Swap. In other words, the power-sourcing equipment 200 accepts and supports the powered device 100 in switching from the UFP to the DFP.

In a possible implementation, step S401 is an optional step, in other words, the power-sourcing equipment 200 may not reply with the accept message. When the power-sourcing equipment 200 supports the powered device 100 in switching from the UFP to the DFP, the power-sourcing equipment 200 directly performs step S402.

S402: The power-sourcing equipment 200 turns off a power supply.

After receiving the instruction DR_Swap, the power-sourcing equipment 200 may turn off the power supply. To be specific, the power-sourcing equipment 200 no longer supplies power to the cable marker 301 through the signal cable 2072 between the pin Vcon203 and the pin Vcon11 of the cable marker 301.

S403: The power-sourcing equipment 200 sends PS_RDY to the powered device 100.

The power-sourcing equipment 200 may send the PS_RDY to the powered device 100. The PS_RDY may indicate that the power-sourcing equipment 200 has reached a required working state, that is, the power supply in the power-sourcing equipment 200 has been turned off.

In a possible implementation, step S403 is an optional step, that is, after turning off the power supply, the power-sourcing equipment 200 may not send the PS_RDY to the powered device 100.

S404: The powered device 100 turns on a power supply, to supply power to the cable marker 302.

Refer to FIG. 2. The powered device 100 may include the pin Vcon103, and the pin Vcon103 is connected to the Vcon21 in the cable marker 302 through the signal cable 2073 of the cable 300. The powered device 100 may turn on the power supply, and then supply power to the cable marker 302 through the signal cable 2073 between the pin Vcon103 and the pin Vcon21 in the cable marker 302.

S405: The Vcon21 in the cable marker 302 is powered on, and determines to respond to a message sop'.

The pin Vcon21 in the cable marker 302 is powered on. Therefore, the cable marker 302 may determine to respond to the message sop'.

For step S405, refer to the description of step S32. Details are not described herein again.

S406: The cable marker 302 supplies power to the cable marker 301.

S407: The Vcon10 in the cable marker 301 is powered on, and determines to respond to the message sop".

The cable marker 302 may supply power to the cable marker 301 through the signal cable 2071 between the pin Vcon20 and the pin Vcon10 in the cable marker 301. In this case, the pin Vcon10 in the cable marker is powered on. After the pin Vcon10 in the cable marker 301 is powered on, the cable marker 301 may determine to respond to the message sop".

In this way, when the powered device 100 sends the message sop' via the pin CC102, the cable marker 302 may respond to the message sop'. When the powered device 100 sends the message sop" via the pin CC102, the cable marker 301 may respond to the message sop".

In the cable 300 shown in FIG. 2, only one conducting wire (for example, the signal cable 2071 shown in FIG. 2) is required between the cable marker 301 and the cable marker 302. In this way, a diameter and costs of the cable are increased. In addition, before communicating with the cable, the UFP (for example, the powered device 100) needs to switch the power supply based on a protocol instruction.

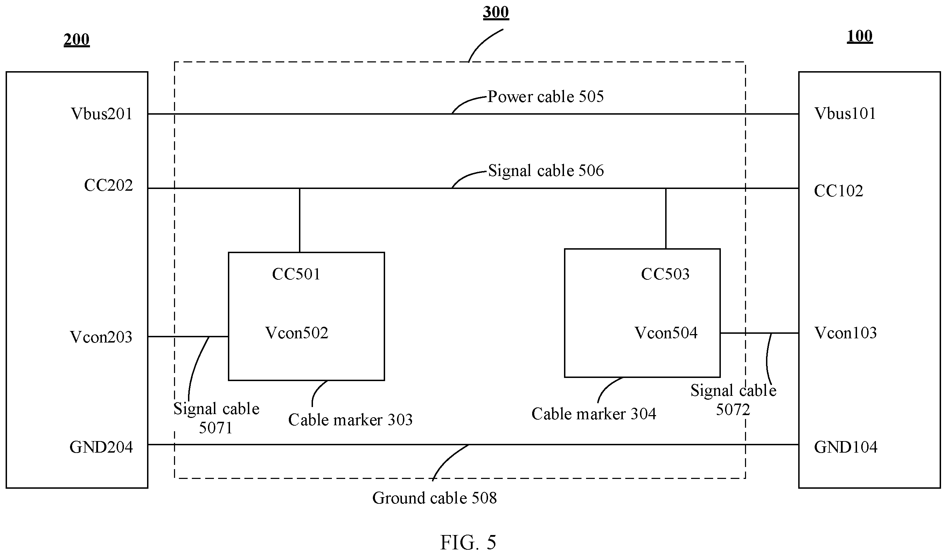

To reduce the costs of the cable and not increase the diameter of the cable, in some conventional technologies, no conducting wire may be added between the two cable markers of the cable 300 for connection. For example, as shown in FIG. 5, the cable 300 may include a cable marker 303, a cable marker 304, a power cable 505, a signal cable 506, a signal cable 5071, a signal cable 5072, and a ground cable 508.

The power cable 505 may connect the pin Vbus201 of the power-sourcing equipment 200 to the pin Vbus101 of the powered device 100. The power-sourcing equipment 200 may provide electric energy for the powered device 100 through the power cable 505.

The cable marker 303 may include a pin CC501 and a pin Vcon502. The pin CC501 in the cable marker 303 may be connected to the signal cable 506, and is connected to the pin CC202 in the power-sourcing equipment 200 and the pin CC102 in the powered device 100 through the signal cable 506 in the cable. The pin Vcon502 in the cable marker 303 may be connected to the pin Vcon203 of the power-sourcing equipment 200 through the signal cable 5071.

The cable marker 304 may include a pin CC503 and a pin Vcon504. The pin CC503 in the cable marker 304 may be connected to the signal cable 506, and is connected to the pin CC202 in the power-sourcing equipment 200 and the pin CC102 in the powered device 100 through the signal cable 506 in the cable. The pin Vcon504 in the cable marker 304 may be connected to the pin Vcon103 of the powered device 100 through the signal cable 5072.

The ground cable 508 may be configured to connect the pin GND204 in the power-sourcing equipment 200 to the pin GND104 in the powered device 100.

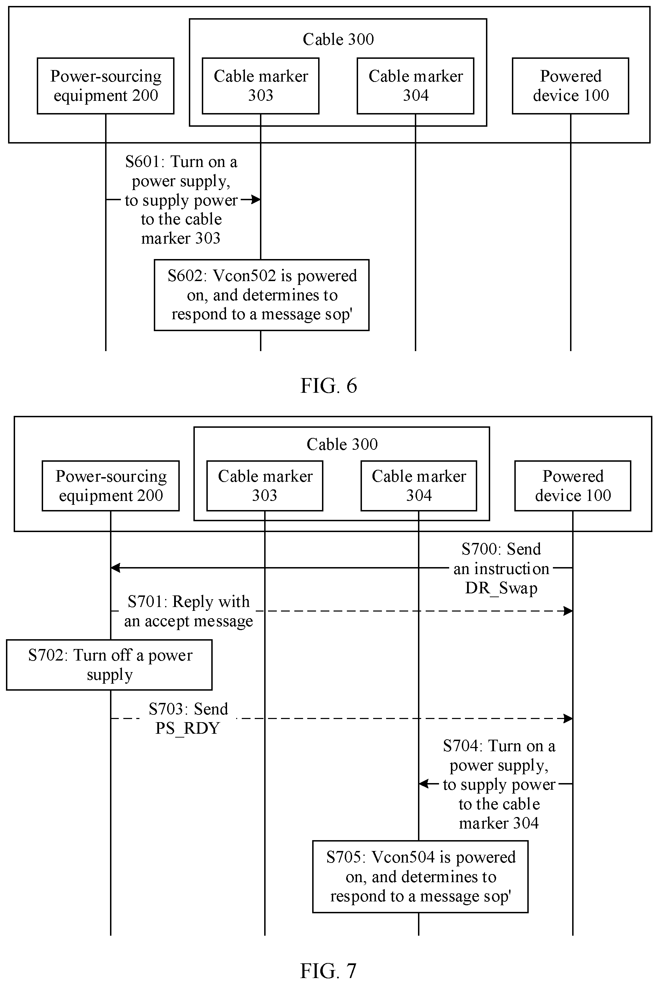

Based on the structures and connection manners of the power-sourcing equipment 100, the powered device 200, and the cable 300 shown in FIG. 5, FIG. 6 shows an existing device identification method. As shown in FIG. 6, the power-sourcing equipment 200 may be used as a DFP in the system 10. Before the powered device 100 communicates with the cable 300, the device identification method may include the following steps.

S601: The power-sourcing equipment 200 turns on a power supply, to supply power to the cable marker 303.

Refer to FIG. 5. The power-sourcing equipment 200 may include the pin Vcon203, and the pin Vcon203 is connected to the pin Vcon502 in the cable marker 303 through the signal cable 5071 of the cable 300. The power-sourcing equipment 200 may turn on the power supply, and then supply power to the cable marker 303 through the signal cable 5071.

S602: The Vcon502 in the cable marker 303 is powered on, and determines to respond to a message sop'.

After the pin Vcon502 in the cable marker 303 is powered on, the cable marker 303 may determine to respond to the message sop'.

For step S601 and step S602, refer to the descriptions of step S31 and step S32. Details are not described herein again.

When the power-sourcing equipment 200 is used as the DFP, only a near-end cable marker of the power-sourcing equipment 200, namely, the cable marker 303 in the cable 300 may be powered on. As specified in a PD protocol, the power-sourcing equipment 200 and the powered device 100 cannot power on the near-end cable marker at the same time. Therefore, when the power-sourcing equipment 200 is used as the DFP, the power-sourcing equipment 200 can communicate with only the cable marker 303. However, because the cable marker 304 is not powered on, the power-sourcing equipment 200 cannot communicate with the cable marker 304.

Based on the structures and connection manners of the power-sourcing equipment 100, the powered device 200, and the cable 300 shown in FIG. 5, FIG. 7 shows an existing device identification method. As shown in FIG. 7, the powered device 100 may be used as a DFP in the system 10. Before the powered device 100 communicates with the cable 300, the device identification method may include the following steps.

S700: The powered device 100 sends an instruction DR_Swap to the power-sourcing equipment 200.

S701: The power-sourcing equipment 200 replies with an accept message to the powered device 100.

S702: The power-sourcing equipment 200 turns off a power supply.

S703: The power-sourcing equipment 200 sends PS_RDY to the powered device 100.

For step S700 to step S703, refer to the descriptions of step S400 to step S403. Details are not described herein again.

S704: The powered device 100 turns on a power supply, to supply power to the cable marker 304.

Refer to FIG. 5. The powered device 100 may include the pin Vcon103, and the pin Vcon103 is connected to the Vcon504 in the cable marker 304 through the signal cable 5072 of the cable 300. The powered device 100 may turn on the power supply, and then supply power to the cable marker 304 through the signal cable 5072.

S705: The Vcon504 in the cable marker 304 is powered on, and determines to respond to a message sop'.

After the pin Vcon504 in the cable marker 304 is powered on, the cable marker 304 may determine to respond to the message sop'.

When the powered device 100 is used as the DFP, only a near-end cable marker of the powered device 100, namely, the cable marker 304 in the cable 300 may be powered on. As specified in a PD protocol, the power-sourcing equipment 200 and the powered device 100 cannot power on the near-end cable marker at the same time. Therefore, when the powered device 100 is used as the DFP, the powered device 100 can communicate with only the cable marker 304. However, because the cable marker 303 is not powered on, the powered device 200 cannot communicate with the cable marker 303.

In the device identification methods shown in FIG. 6 and FIG. 7, in a communication process, the two cable markers in the cable 300 cannot be powered on at the same time. The power-sourcing equipment 200 and the powered device 100 need to access the two cable markers in a polling manner. To be specific, when the power-sourcing equipment 200 accesses the cable marker 303, if the powered device 100 wants to access the cable marker 304, a power supply needs to be first switched according to a protocol, that is, turning on a power supply by the power-sourcing equipment 200 to supply power to a cable marker is switched to turning on a power supply by the powered device 100 to supply power to a cable marker. Then, the powered device 100 can access the cable marker 304. In this way, in a charging process, design complexity of communication between the power-sourcing equipment 200 and the powered device 100 and the two cable markers is increased, causing a bus conflict.

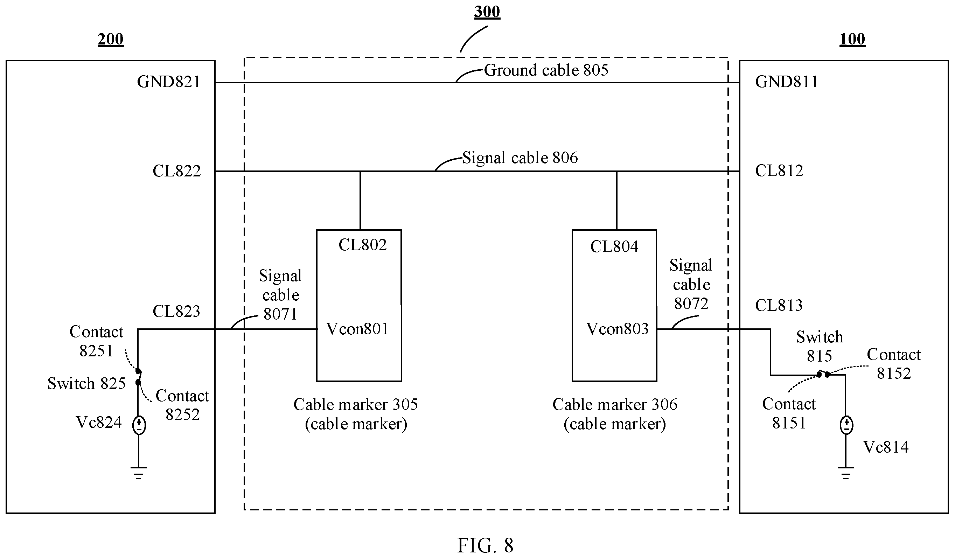

For a cable with two cable markers, to resolve the problem in the foregoing existing device identification methods, embodiments of this application provide a device identification method. According to the device identification method provided in embodiments of this application, when no conducting wire is added between the two cable markers of the cable, both power-sourcing equipment and a powered device can identify the two cable markers in the cable, and can access the two cable markers in the cable at the same time. Before the device identification method provided in embodiments of this application is described, another structure and connection manner of the power-sourcing equipment 200, the cable 300, and the powered device 100 provided in an embodiment of this application are first described. FIG. 8 illustrates another structure and connection manner of the power-sourcing equipment 200, the cable 300, and the powered device 100.

As shown in FIG. 8, the power-sourcing equipment 200 may include a pin GND821, a pin CL822, and a pin CL823, where the pin CL823 is connected to a power supply Vc824. The powered device 100 may include a pin GND811, a pin CL812, and a pin CL813, where the pin CL813 is connected to a power supply Vc814. The cable 300 may include a cable marker (cable marker) 305, a cable marker 306, a ground cable 805, a signal cable 806, a signal cable 8071, and a signal cable 8072. The cable marker 305 may include a pin Vcon801 and a pin CL802. The cable marker 306 may include a pin Vcon803 and a pin CL804.

The pin GND811 of the powered device 100 is connected to the pin GND821 of the power-sourcing equipment 200 through the ground cable 805 of the cable 300. The pin CL812 of the powered device 100 is connected to the pin CL822 of the power-sourcing equipment 200 through the signal cable 806 of the cable 300.

The pin CL823 of the power-sourcing equipment 200 may be connected to the pin Vcon801 in the cable marker 305 through the signal cable 8071. When the power supply Vc824 in the power-sourcing equipment 200 is turned on, power may be supplied to the cable marker 305 through the signal cable 8071. For example, as shown in FIG. 8, when a switch 825 in the power-sourcing equipment 200 is turned on, that is, when a contact 8251 and a contact 8252 of the switch 825 are connected to each other, it may be considered that the power supply Vc824 of the power-sourcing equipment 200 is turned on.

The pin CL813 of the powered device 100 may be connected to the pin Vcon803 in the cable marker 306 through the signal cable 8072. When the power supply Vc814 of the powered device 100 is turned on, power may be supplied to the cable marker 306 through the signal cable 8072. For example, as shown in FIG. 8, when a switch 815 in the powered device 100 is turned on, that is, when a contact 8151 and a contact 8152 of the switch 815 are connected to each other, it may be considered that the power supply Vc814 of the power-sourcing equipment 200 is turned on.

The pin CL802 in the cable marker 305 may be connected to the signal cable 806, and is connected to the pin CL822 in the power-sourcing equipment 200 and the pin CL812 in the powered device 100 through the signal cable 806.

The pin CL804 in the cable marker 306 may be connected to the signal cable 806, and is connected to the pin CL822 in the power-sourcing equipment 200 and the pin CL812 in the powered device 100 through the signal cable 806.

The power-sourcing equipment 200 and the powered device 100 may communicate with each other through the signal cable 806. The power-sourcing equipment 200 and the cable marker 305 may communicate with each other through the signal cable 806. The power-sourcing equipment 200 and the cable marker 306 may communicate with each other through the signal cable 806. Similarly, the powered device 100 and the cable marker 305 may communicate with each other through the signal cable 806. The powered device 100 and the cable marker 306 may communicate with each other through the signal cable 806.

In this embodiment of this application, the cable marker 305 and the cable marker 306 may be referred to as electronic markers or cable electronic markers. This is not limited in embodiments of this application.

In some examples, wiring that is led out from an internal circuit of any one of the power-sourcing equipment 200, the powered device 100, the cable marker 305, and the cable marker 306 and that is between the internal circuit and an external circuit may be referred to as a pin (PIN). The pin may also be referred to as a contact or a pad. For example, the pin CL822 in the power-sourcing equipment 200 may also be referred to as a contact CL822, a pad CL822, or the like in the power-sourcing equipment 200. This is not limited in embodiments of this application.

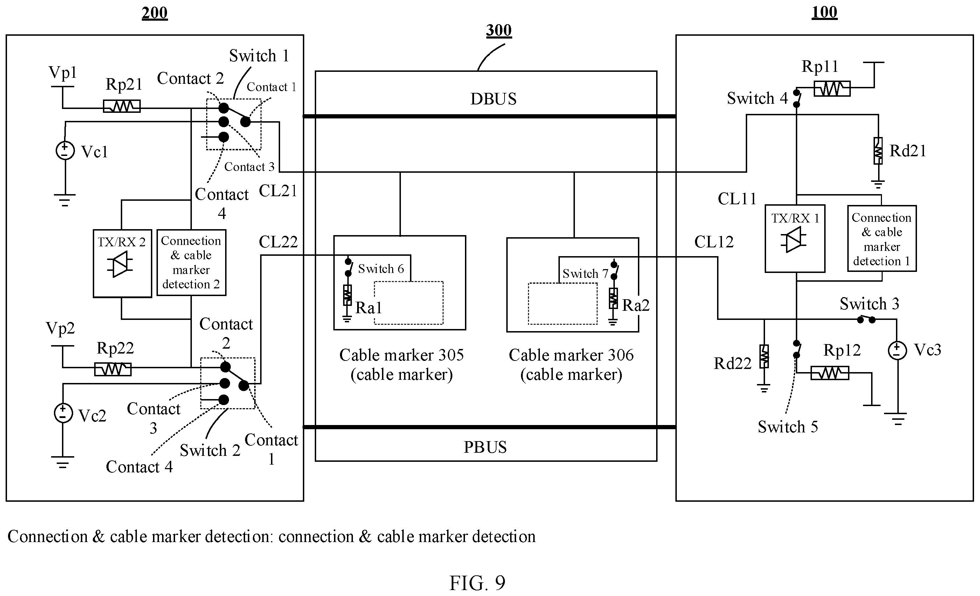

Further, in a possible implementation, the powered device 100, the power-sourcing equipment 200, and the cable 300 provided in embodiments of this application may include more electronic components. For example, FIG. 9 shows another structure and connection manner of the power-sourcing equipment 200, the cable 300, and the powered device 100.

As shown in FIG. 9, the powered device 200 may include a plurality of resistors (for example, a resistor Rp21 and a resistor Rp22), a plurality of power supplies (for example, a power supply Vc1, a power supply Vc2, a power supply Vp1, and a power supply Vp2), a receive/transmit (receive/transmit, RX/TX) component 2, a connection & cable marker detection (connection & cable marker detection) component 2, a pin CL21, and a pin CL22.

In some possible examples, the powered device 200 may further include a switch 1 and a switch 2. Both the switch 1 and the switch 2 may be single-pole multi-throw switches. For example, the switch 1 may have a plurality of contacts, a contact 1, a contact 2, a contact 3, and a contact 4. The contact 1 is connected to the pin CL21, the contact 2 is connected to the resistor Rp21, and the contact 3 is connected to the power supply Vc1. The contact 4 is connected to one end of a conducting wire, and the other end of the conducting wire is not connected to another component.

When the contact 1 and the contact 2 in the switch 1 are connected to each other, the pin CL21 in the power-sourcing equipment 200 may be connected to the resistor Rp21 and the power supply Vp1 via the switch 1. In this case, the power-sourcing equipment 200 may receive communication data via the pin CL21 (the communication data may be sent by any one of the powered device 100, the cable marker 305, and the cable marker 306). When the contact 1 and the contact 3 in the switch 1 are connected to each other, the pin CL21 in the power-sourcing equipment 200 may be connected to the power supply Vc1 via the switch 1. In this case, the power-sourcing equipment 200 may send communication data to any one of the powered device 100, the cable marker 305, and the cable marker 306 via the pin CL21. When the contact 1 and the contact 4 in the switch 1 are connected to each other, the power-sourcing equipment 200 can neither send nor receive communication data.

For example, the switch 2 of the power-sourcing equipment 200 may also have a plurality of contacts, a contact 1, a contact 2, a contact 3, and a contact 4. The contact 1 of the switch 2 is connected to the pin CL22. The contact 2 of the switch 2 is connected to the resistor Rp22 and the power supply Vp2. The contact 3 of the switch 2 is connected to the power supply Vc2. The contact 4 of the switch 2 is connected to one end of a conducting wire, and the other end of the conducting wire is not connected to another component. When the contact 1 is connected to the contact 3, the power supply Vc2 in the power-sourcing equipment 200 may supply power to the cable marker 305 via the switch 2 and the pin CL22.

Optionally, in a possible implementation, when the power-sourcing equipment 200 does not supply power to the cable marker 305, the contact 1 in the switch 1 may be connected to the contact 2 by default. The contact 1 in the switch 2 may be connected to the contact 2 by default.

The power supply Vp1 may be configured to provide a voltage for the resistor Rp21. The power supply Vp2 may be configured to provide a voltage for the resistor Rp22.

The RX/TX component 2 may be configured to determine whether the power-sourcing equipment 200 is a signal transmitter or a signal receiver. The connection & cable marker detection component 2 may be configured to detect plugin or pullout of a cable and identify whether a cable marker exists in the cable based on a difference between a voltage at two ends of the resistor Rp21 and a voltage at two ends of the resistor Rp22. In some examples, the connection & cable marker detection component 2 may also be referred to as a detection module 2.

As shown in FIG. 9, the powered device 100 may include a plurality of resistors (for example, a resistor Rp11, a resistor Rp12, a resistor Rd21, and a resistor Rd22), a power supply Vc3, an RX/TX component 1, a connection & cable marker detection component 1, a pin CL11, and a pin CL12.

In some feasible examples, the powered device 100 may further include a switch 3, a switch 4, and a switch 5. The switch 3, the switch 4, and the switch 5 may be single-pole single-throw switches. When the switch 3 is turned on, the power supply Vc3 in the powered device 100 may supply power to the cable marker 306 through the pin CL12 of the power-sourcing equipment 100.

Optionally, in a possible implementation, the switch 4 and the switch 5 may be turned on by default.

The RX/TX component 1 may be configured to determine whether the powered device 100 is a signal transmitter or a signal receiver. The connection & cable marker detection component 1 may be configured to detect plugin or pullout of a cable and identify whether a cable marker exists in the cable. In some examples, the connection & cable marker detection component 1 may also be referred to as a detection module 1.

The cable 300 may include a bus DBUS, a bus PBUS, a cable marker 305, and a cable marker 306. The cable marker 305 may include a resistor Ra1 and a switch 6. The cable marker 306 may include a resistor Ra2 and a switch 7.

Optionally, in a possible implementation, the switch 6 and the switch 7 may be turned on by default.

The bus DBUS may be configured to transmit communication data. The bus PBUS may be configured to transmit power.

A component and a circuit structure in the power-sourcing equipment 200, the powered device 100, the cable marker 305, and the cable marker 306 are not limited in embodiments of this application. For a connection manner between the power-sourcing equipment 200, the powered device 100, the cable marker 305, and the cable marker 306, refer to the description in FIG. 8. Details are not described herein again.

It may be understood that the electronic components, the circuit structures, and the names of the electronic components included in the power-sourcing equipment 200, the powered device 100, and the cable 300 shown in FIG. 9 are merely examples. The electronic components, the circuit structures, and the names of the electronic components included in the power-sourcing equipment 200, the powered device 100, and the cable 300 are not limited in embodiments of this application.

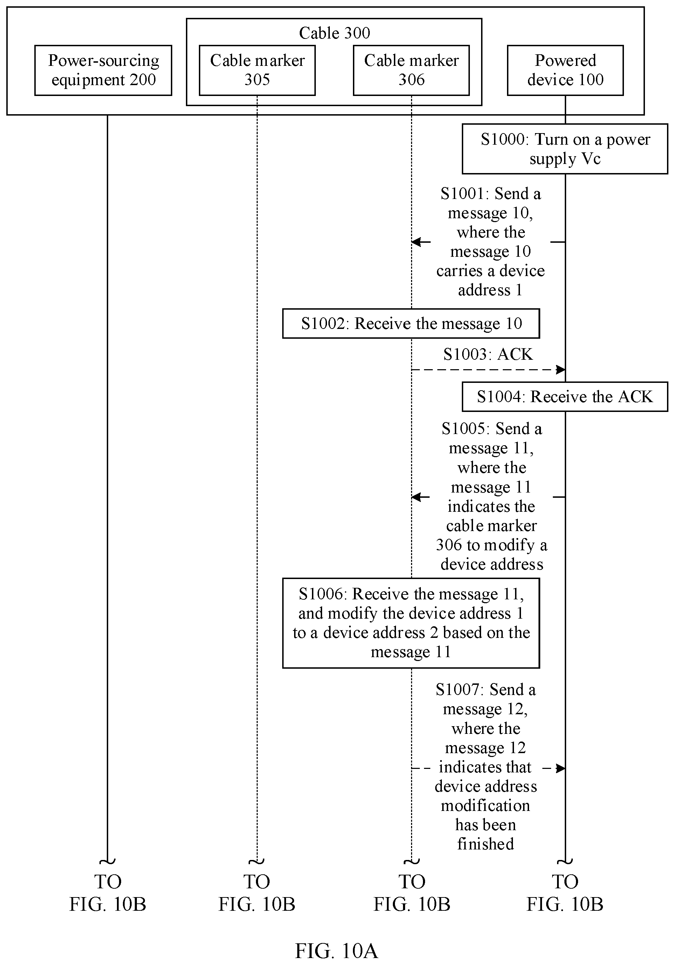

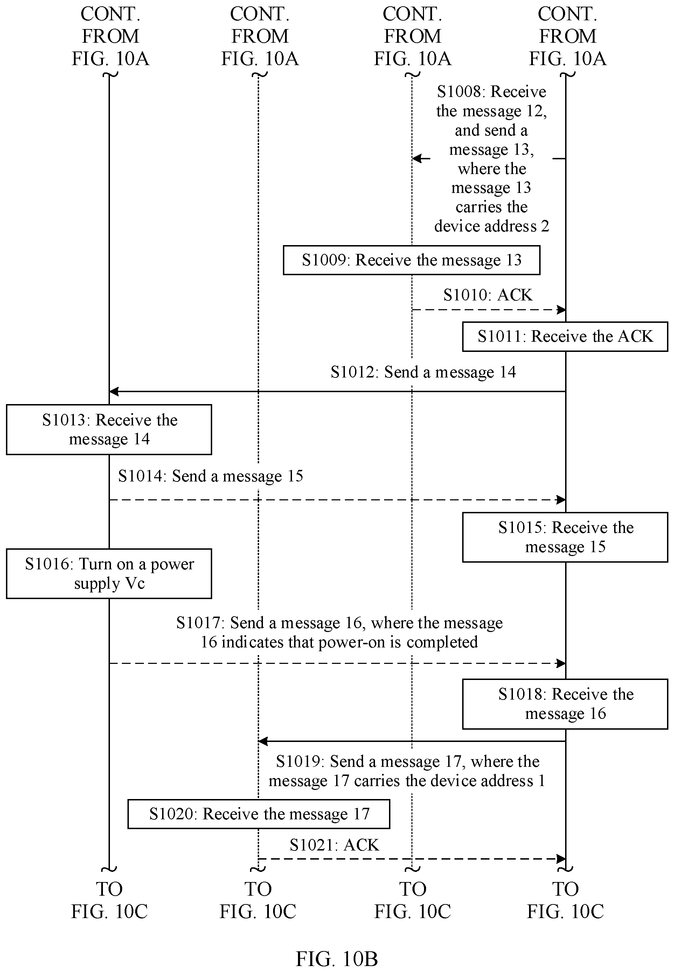

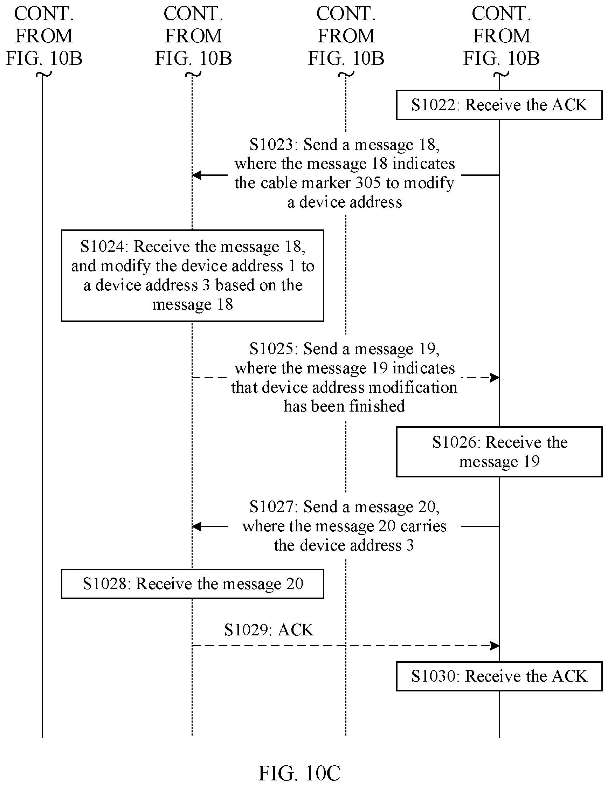

Based on the structures and connection manners of the power-sourcing equipment 100, the powered device 200, and the cable 300 shown in FIG. 8, an embodiment of this application provides a device identification method. As shown in FIG. 10A to FIG. 10C, when the powered device 100 is used as a DFP, the device identification method may include the following steps.

S1000: The powered device 100 turns on a power supply Vc.

The power supply Vc turned on by the powered device 100 may be the power supply Vc814 shown in FIG. 8, or may be the power supply Vc3 shown in FIG. 9. The following uses an example in which the power supply Vc turned on by the powered device 100 is the power supply Vc814 shown in FIG. 8 for description.

As shown in FIG. 8, the powered device 100 may turn on the power supply Vc814, and then power on the cable marker 306 via the pin CL813 and the pin Vcon803. After being powered on, the cable marker 306 can receive communication data sent by the powered device 100 or the power-sourcing equipment 200. A format of the communication data sent by the powered device 100 or the power-sourcing equipment 200 may be shown in Table 1 below.

**Table 1**

| Communication data | | | | |
|---|---|---|---|---|
| Data header | | | | Data |
| Device address (3 bits) | Message category (4 bits) | Protocol version number (6 bits) | Message type (3 bits) | |

As shown in Table 1, the communication data between the powered device 100 and the cable marker 306 may include a data header (or referred to as a message header) field and a data field. The data header field may include a device address field, a message category field, and a protocol version number field. An address of a device that receives the communication data is filled in the device address field. It may be understood that the data header field shown in Table 1 is merely an example, and the data header field may include more or fewer fields. This is not limited in embodiments of this application.

For example, a length of the device address field may be 3 bits (bits). A length of the message category field may be 4 bits. A length of the protocol version number field may be 6 bits. A length of the message type field may be 3 bits. It may be understood that the lengths of the device address field, the message category field, the protocol version number field, and the message type field are not limited in embodiments of this application.

In Table 2, an example in which the length of the device address field is 3 bits, the length of the message category field is 4 bits, the length of the protocol version number field is 6 bits, and the length of the message type field is 3 bits is used to describe in detail values and corresponding meanings thereof of the device address field, the message category field, the protocol version number field, the message type field, and the like.

**Table 2**

| | | | |
|---|---|---|---|
| Data header field | Bit | Field | Value and Description |
| | Bit 13 to bit 15 | Device address | 000: default address of a cable electronic marker |
| | | | 001: address of power-sourcing equipment |
| | | | 010: address of a powered device |
| | | | 011: address of a near-end cable electronic marker |
| | | | 100: address of a far-end cable electronic marker |
| | | | Others: reserved |
| | Bit 9 to bit 12 | Message category | 0001: DBUS-related instruction |
| | | | 0010: PBUS-related instruction |
| | | | Others: reserved |
| | Bit 3 to bit 8 | Protocol version number | 000001: initial version 1.0.0 |
| | | | 010001: version 1.0.1 |
| | | | 000010: version 2.0.0 |
| | | | Others: reserved |
| | Bit 0 to bit 2 | Message type | 000: control message |
| | | | 001: data message |
| | | | 010: user-defined message |
| | | | Others: reserved |

As shown in Table 2, a length of the data header field may be 16 bits. The 13^{th} bit to the 15^{th} bit in the data header field may be the device address field. The 9^{th} bit to the 12^{th} bit in the data header field may be the message category field. The 3^{rd} bit to the 8^{th} bit in the data header field may be the protocol version number field. The 0^{th} bit to the 2^{nd} bit in the data header field may be the message type field. In the data header field, the 15^{th} bit may be a high-order bit, and the 0^{th} bit may be a low-order bit. Alternatively, the 15^{th} bit may be a low-order bit, and the 0^{th} bit may be a high-order bit. This is not limited in embodiments of this application.

As shown in Table 2, when the device address field is "000", it represents that the device address field is the default address of the cable electronic marker. When the device address field is "001", it represents that the device address field is the address of the power-sourcing equipment. When the device address field is "010", it represents that the device address field is the address of the powered device. When the device address field is "011", it represents that the device address field is the address of the near-end cable electronic marker. When the device address field is "100", it represents that the device address field is the address of the far-end cable electronic marker.

It may be understood that the values of the device address field and the corresponding meanings shown in Table 2 are merely examples. The length of the device address field, the bit value of the device address field, and the meaning corresponding to the bit value are not limited in embodiments of this application.

As shown in Table 2, when the message category field is "0001", it represents that the data part after the data header field is the DBUS-related instruction. When the message category field is "0010", it represents that the data part after the data header field is the PBUS-related instruction.

It may be understood that the values of the message category field and the corresponding meanings shown in Table 2 are merely examples. The length of the message category field, the bit value of the message category field, and the meaning corresponding to the bit value are not limited in embodiments of this application.

As shown in Table 2, when the protocol version number field is "000001 ", it represents that a version of a currently used protocol is the initial version 1.0.0. When the protocol version number field is "010001", it represents that a version of a currently used protocol is the version 1.0.1. When the protocol version number field is "000010", it represents that a version of a currently used protocol is the version 2.0.0.

It may be understood that the values of the protocol version number field and the corresponding meanings shown in Table 2 are merely examples. The length of the protocol version number field, the bit value of the protocol version number field, and the meaning corresponding to the bit value are not limited in embodiments of this application.

As shown in Table 2, when the message type field is "000", it represents that corresponding communication data is the control message. When the message type field is "001", it represents that corresponding communication data is the data message. When the message type field is "010", it represents that corresponding communication data is the user-defined message.

It may be understood that the values of the message type field and the corresponding meanings shown in Table 2 are merely examples. The length of the message type field, the bit value of the message type field, and the meaning corresponding to the bit value are not limited in embodiments of this application.

It may be understood that, when the pin CL12 of the powered device 100 is connected to the cable marker 306, and the powered device 100 may directly supply power to the cable marker 306, the cable marker 306 may be referred to as a near-end cable marker of the powered device 100, or a near-end cable electronic marker, a near-end electronic marker, or the like. However, the powered device 100 cannot directly supply power to the cable marker 305. In this case, the cable marker 305 may be referred to as a far-end cable marker of the powered device 100, or a far-end cable electronic marker, a far-end electronic marker, or the like.

S1001: The powered device 100 sends a message 10, where the message 10 carries a device address 1.

The powered device 100 may send the message 10. The message 10 may carry the device address 1. For example, the message 10 may be a ping message, and the device address 1 may be "000". The ping message carries the device address 1, namely, "000". The message 10 and the device address 1 are not specifically limited in embodiments of this application.

The powered device 100 may determine, by using the message 10, whether a cable marker with the device address 1 currently exists in the cable 300 and whether the cable marker can perform communication.

The following uses an example in which the device address 1 is "000", a device address 2 is "011", and a device address 3 is "100" for description.

S1002: The cable marker 306 receives the message 10.

S1003: The cable marker 306 replies with an ACK to the powered device 100.

S1004: The powered device 100 receives the ACK.

Because a device address of the cable marker 306 is the device address 1, the cable marker 306 can receive the message 10. After receiving the message 10, the cable marker 306 may reply with an acknowledge character (acknowledge character, ACK) to the powered device 100. The powered device 100 may receive the ACK sent by the cable marker 306. After the powered device 100 receives the ACK, the powered device 100 may determine that the cable marker whose device address is the device address 1 exists in the cable 300 and that the cable marker can perform communication.

In a possible implementation, step S1003 and step S1004 may be optional steps, that is, after receiving the message 10 sent by the powered device 100, the cable marker 306 may not reply with the ACK to the powered device 100, and the powered device 100 may not accept the ACK.

S1005: The powered device 100 sends a message 11, where the message 11 indicates the cable marker 306 to modify the device address.

The powered device 100 may send the message 11. The message 11 indicates the cable marker whose device address is the device address 1 to modify the device address from the device address 1 to the device address 2. In a possible implementation, the message 11 may carry the device address 1 and the device address 2. A message header of the message 11 may include the device address 1, that is, a value of a device address field of the message header may be the device address 1. Message data of the message 11 may include the device address 2.

For example, the message 11 may be an instruction modify_marker_ID, the device address 1 may be "000", and the device address 2 may be "011". The instruction modify_marker_ID carries a default device address of the cable marker, for example, "000". Then, the instruction modify_marker_ID instructs the cable marker whose device address is "000" to modify the device address from "000" to "011".

It may be understood that specific content of the message 11, and the device address 1 and the device address 2 are not limited in embodiments of this application.

S1006: The cable marker 306 receives the message 11, and modifies the device address 1 to the device address 2 based on the message 11.

After receiving the message 11, the cable marker 306 may modify the device address 1 to the device address 2.

It may be understood that because only the cable marker 306 is powered on currently, and the cable marker 305 is not powered on, the message 12 sent by the powered device 100 can be received only by the cable marker 306.

Optionally, in a possible implementation, the message 11 may carry the device address 1, but does not carry the device address 2. After receiving the message 11, the cable marker 306 may modify the device address to a device address different from the device address 1, for example, the device address 2.

S1007: The cable marker 306 sends a message 12 to the powered device 100, where the message 12 indicates that device address modification has been finished.

After finishing the device address modification, the cable marker 306 may send the message 12 to the powered device 100. The message 12 may indicate that the device address of the cable marker 306 has been modified. For example, the message 12 may be a message modify_finish. Specific content of the message 12 is not limited in embodiments of this application.

In a possible implementation, step S1007 may be an optional step. In other words, the cable marker 306 may not perform step S1005.

S1008: The powered device 100 receives the message 12, and sends a message 13 to the cable marker 306, where the message 13 carries the device address 2.

After receiving the message 12, the powered device 100 may send the message 13 to the cable marker 306. The message 13 may carry the device address 2. The message 13 may be used to determine whether the device address of the cable marker 306 has been modified to the device address 2, and determine whether the cable marker 306 can perform communication.

For example, the message 13 may be a ping message carrying the device address 2. Specific content of the message 13 is not limited in embodiments of this application.

S1009: The cable marker 306 receives the message 13.

S1010: The cable marker 306 replies with an ACK to the powered device 100.

S1011: The powered device 100 receives the ACK.

Because the device address of the cable marker 306 has been modified to the device address 2, the cable marker 306 can receive the message 13 carrying the device address 3. After receiving the message 13, the cable marker 306 may reply with the ACK to the powered device 100. The powered device 100 may receive the ACK replied with by the cable marker 306. After the powered device 100 receives the ACK, the powered device 100 may determine that the device address of the cable marker 306 is the device address 2 and that the cable marker 306 can perform communication.

In a possible implementation, step S1010 and step S1011 may be optional steps. In other words, the cable marker 306 may not perform step S1010, and the powered device 100 may not perform step S1011.

S1012: The powered device 100 sends a message 14 to the power-sourcing equipment 200.

The powered device 100 may send the message 14 to the power-sourcing equipment 200. The message 14 may indicate the power-sourcing equipment 200 to turn on a power supply Vc, to power on the cable marker 305. For example, the message 14 may be an instruction power_marker. The message 14 is not specifically limited in embodiments of this application.

Herein, that the power-sourcing equipment 200 powers on the cable marker 305 may mean that after turning on the power supply Vc, the power-sourcing equipment 200 inputs power to (or referred to as provides power for) the cable marker 305.

In an implementation, the message 14 carries a device address of the power-sourcing equipment 200. For example, the device address of the power-sourcing equipment 200 may be "001".

S1013: The power-sourcing equipment 200 receives the message 14.

S1014: The power-sourcing equipment 200 sends a message 15 to the powered device 100.

S1015: The powered device 100 receives the message 15.

After receiving the message 14, the power-sourcing equipment 200 may send the message 15 to the powered device 100. The message 15 may indicate that the power-sourcing equipment 200 receives and supports the message 14. In other words, the power-sourcing equipment 200 supports turning on the power supply Vc and supplying power to the cable marker 305.

For example, the message 15 may be an accept message. Specific content of the message 15 is not limited in embodiments of this application.

The powered device 100 may receive the message 15.

In a possible implementation, step S1014 and step S1015 may be optional steps. In other words, the power-sourcing equipment 200 may not perform step S1014, but directly perform the following step S1016. The powered device 100 may not perform step S1015.

S1016: The power-sourcing equipment 200 turns on the power supply Vc.

The power supply Vc of the power-sourcing equipment 200 may be the power supply Vc824 shown in FIG. 8, or may be the power supply Vc2 shown in FIG. 9. The following uses an example in which the power supply Vc turned on by the power-sourcing equipment 200 is the power supply Vc824 shown in FIG. 8 for description.

As shown in FIG. 8, the power-sourcing equipment 200 may turn on the power supply Vc824, and then power on the pin Vcon801 in the cable marker 305 via the pin CL823. After being powered on, the cable marker 305 can receive communication data sent by the powered device 100 or the power-sourcing equipment 200. For a format of the communication data sent when the powered device 100 or the power-sourcing equipment 200 communicates with the cable marker 305, refer to the descriptions in Table 1 and Table 2. Details are not described herein again.

S1017: The power-sourcing equipment 200 sends a message 16 to the powered device 100, where the message 16 indicates that power-on is completed.

S1018: The powered device 100 receives the message 16.

The power-sourcing equipment 200 may send the message 16 to the powered device 100. The message 16 may indicate that power-on is completed, that is, indicate that the power-sourcing equipment 200 has turned on the power supply Vc and powered on the cable marker 305. For example, the message 16 may be an instruction PS_RDY. The message 16 is not specifically limited in embodiments of this application.

The powered device 100 may receive the message 16. In a possible implementation, step S1017 and step S1018 may be optional steps. In other words, the power-sourcing equipment 200 may not perform step S1017. The powered device 100 may not perform step S1018.

S1019: The powered device 100 sends a message 17 to the cable marker 305, where the message 17 carries the device address 1.

S1020: The cable marker 305 receives the message 17.

The powered device 100 may send the message 17 to the cable marker 305. The message 17 carries the device address 1. It may be understood that, the device address of the cable marker 306 has been modified to the device address 2, and a device address of the cable marker 305 is still the device address 1. Therefore, when the powered device 100 sends the message carrying the device address 1, the cable marker 305 receives the message 17 carrying the device address 1. The powered device 100 may determine, by using the message 17, whether a current device address of the cable marker 305 is the device address 1, and determine whether the cable marker 305 can currently perform communication.

For example, the message 17 may be a ping message carrying the device address 1. Specific content of the message 17 is not limited in embodiments of this application.

Because the device address of the cable marker 305 is the device address 1, and the device address of the cable marker 306 has been modified to the device address 2, the cable marker 305 can receive the message 17 carrying the device address 1.

S1021: The cable marker 305 replies with an ACK to the powered device 100.

S1022: The powered device 100 receives the ACK.

After receiving the message 17, the cable marker 305 may reply with the ACK to the powered device 100. The powered device 100 may receive the ACK. After receiving the ACK, the powered device 100 may determine that the cable marker 305 can perform communication.

In a possible implementation, step S1021 and step S1022 may be optional steps, that is, after receiving the message 16 sent by the powered device 100, the cable marker 305 may not reply with the ACK to the powered device 100. The powered device 100 may not receive the ACK.

S1023: The powered device 100 sends a message 18 to the cable marker 305, where the message 18 indicates the cable marker 305 to modify the device address.

The powered device 100 may send the message 18 to the cable marker 305. The message 18 indicates the cable marker 305 to modify the device address from the device address 1 to the device address 3. The message 18 may carry the device address 1 and the device address 3.

For example, the message 18 may be an instruction modify_marker_ID carrying the device address 1 and the device address 3. The device address 1 may be "000", and the device address 3 may be "100". The instruction modify_marker_ID carries the current device address of the cable marker 305, for example, "000". Then, the instruction modify_marker_ID instructs the cable marker 305 to modify the device address from "000" to "100".

It may be understood that specific content of the message 18 and the device address 3 are not limited in embodiments of this application.

S1024: The cable marker 305 receives the message 18, and modifies the device address 1 to the device address 3 based on the message 18.

After receiving the message 18, the cable marker 305 may modify the device address 1 to the device address 3.

S1025: The cable marker 305 sends a message 19 to the powered device 100, where the message 19 indicates that device address modification has been finished.

S1026: The powered device 100 receives the message 19.

After finishing the device address modification, the cable marker 305 may send the message 19 to the powered device 100. The message 19 may indicate that the device address of the cable marker 305 has been modified. For example, the message 19 may be a message modify_finish. Specific content of the message 19 is not limited in embodiments of this application.

In a possible implementation, step S1025 and step S1026 may be optional steps. In other words, the cable marker 305 may not perform step S1025. The powered device 100 may not perform step S1026.

S1027: The powered device 100 sends a message 20 to the cable marker 305, where the message 20 carries the device address 3.

S1028: The cable marker 305 receives the message 20.

The powered device 100 may send the message 20 to the cable marker 305. The message 20 may carry the device address 3. The message 20 may be used to determine whether the device address of the cable marker 305 has been modified to the device address 3, and determine whether the cable marker 305 can currently perform communication.

For example, the message 20 may be a ping message carrying the device address 3. The message 20 is not specifically limited in embodiments of this application.

Because the device address of the cable marker 305 has been modified to the device address 3, the cable marker 305 can receive the message 30 carrying the device address 3.

S1029: The cable marker 305 replies with an ACK to the powered device 100.

S1030: The powered device 100 receives the ACK.

After receiving the message 20, the cable marker 305 may reply with the ACK to the powered device 100. The powered device 100 may receive the ACK. After receiving the ACK, the powered device 100 may determine that the cable marker 305 can perform communication.

In a possible implementation, step S1029 and step S1030 may be optional steps. In other words, the cable marker 305 may not perform step S1029. The powered device 100 may not perform step S1030.

In this way, according to the device identification method provided in this embodiment of this application, after being successfully connected to the cable 300 and the power-sourcing equipment 200, the powered device 100 can correctly identify the two cable markers in the cable. The powered device 100 indicates that the device address of the cable marker 306 and the device address of the cable marker 305 are modified differently. Therefore, the powered device 100 can distinguish between, based on the device addresses, a message sent to the cable marker 305 and a message sent to the cable marker 306. For example, the message sent by the powered device 100 to the cable marker 306 carries the device address 2. The message sent by the powered device 100 to the cable marker 305 carries the device address 3.

In addition, the powered device 100 can correctly identify the two cable markers in the cable. The powered device 100 may obtain information about the two cable markers in the cable 300 by using an instruction, so that functions such as real-time detection of a temperature of the cable 300 and communication signal enhancement of the cable 300 can be implemented.

In addition, in the cable 300 shown in FIG. 8, no additional connection line is required in the cable marker 305 and the cable marker 306. This can reduce costs of the cable, and reduce design complexity of the cable marker in the cable.

It may be understood that the device address 1 may be a default address of the cable marker 305 and a default address of the cable marker 306. The near-end cable marker may modify the device address from the default address to the device address 2, and the far-end cable marker may modify the device address from the default address to the device address 3. The foregoing uses an example in which the device address 1 is "000", the device address 2 is "011", and the device address 3 is "100" for description. The device address 1, the device address 2, and the device address 3 are not limited in this application.

Specific content included in the message 10 to the message 20 and specific formats of the message 10 to the message 20 are not limited in embodiments of this application.

In a possible implementation, the powered device 100 may indicate only the cable marker 306 to modify the device address without indicating the cable marker 305 to modify the device address. In other words, the powered device 100, the power-sourcing equipment 200, the cable marker 305, and the cable marker 306 may perform only the foregoing steps S1000 to S1013, and do not perform the foregoing steps S1014 to S1018. In this way, according to the device identification method, after being successfully connected to the cable 300 and the power-sourcing equipment 200, the powered device 100 can correctly identify the two cable markers in the cable. The device address of the cable marker 306 is modified to the device address 2, and the device address of the cable marker 305 is still the default device address 1. Device addresses of the cable marker 306 and the cable marker 305 are different. Therefore, the powered device 100 can distinguish between, based on the device addresses, a message sent to the cable marker 306 and a message sent to the cable marker 306.

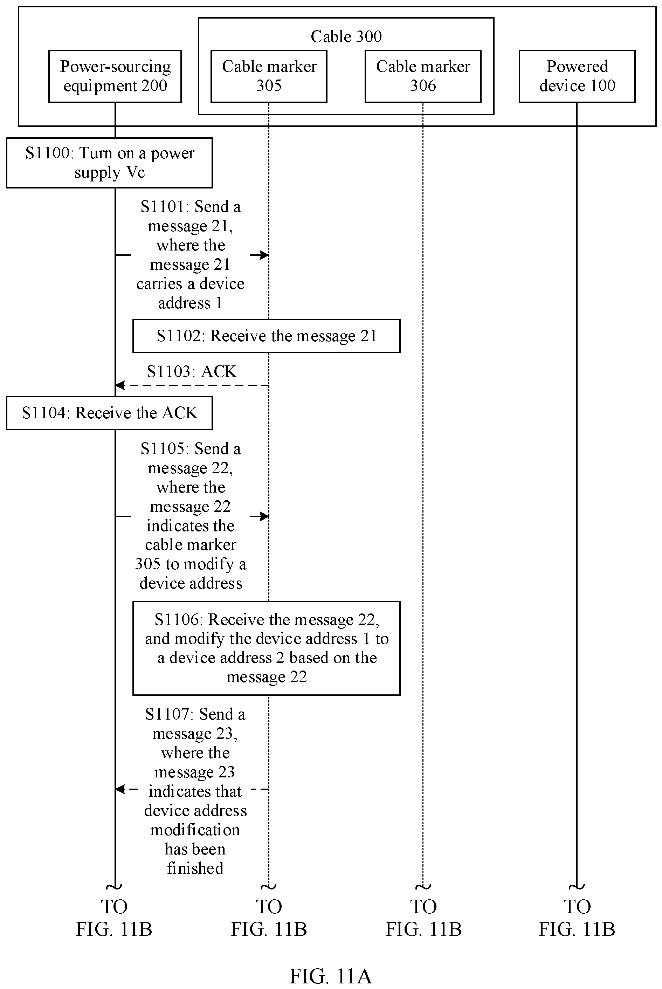

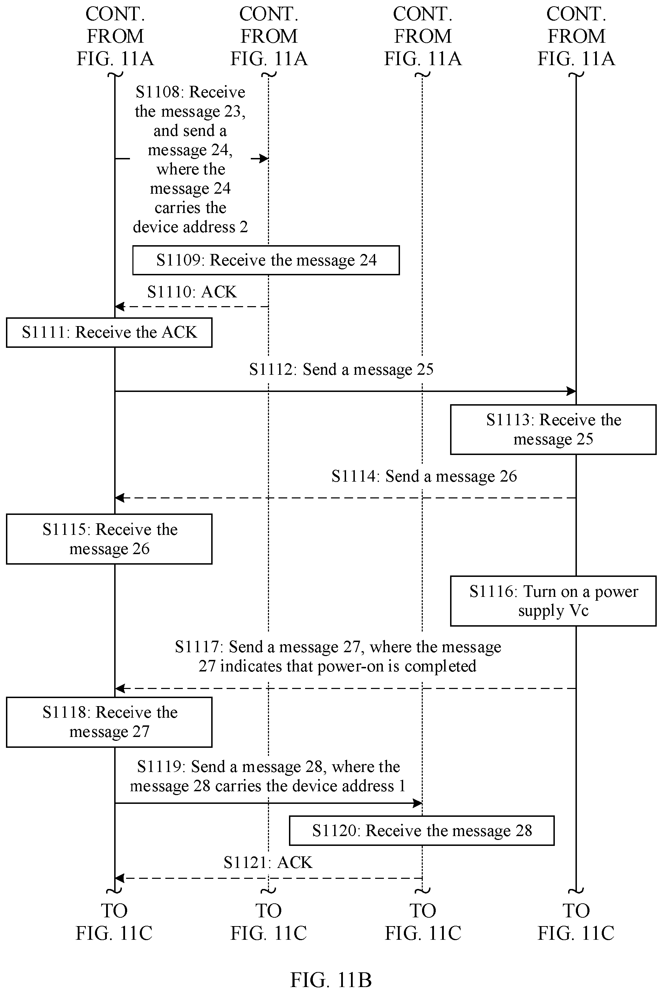

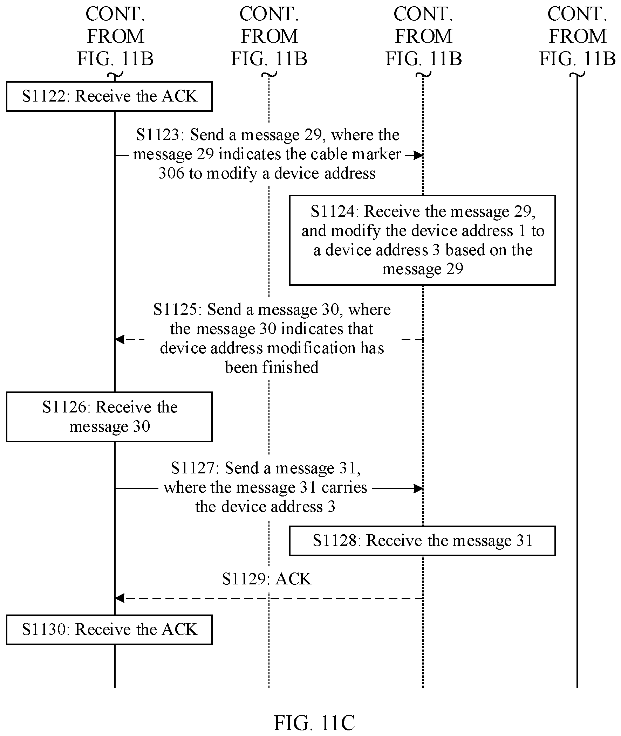

In a possible implementation, the power-sourcing equipment 200 may be used as a DFP to identify the two cable markers in the cable 300. In other words, the power-sourcing equipment 200 may send a message to indicate the cable marker 305 to modify the device address, and send a message to indicate the cable marker 306 to modify the device address. For details, refer to the description in FIG. 11A to FIG. 11C.

Based on the structures and connection manners of the power-sourcing equipment 100, the powered device 200, and the cable 300 shown in FIG. 8, an embodiment of this application provides a device identification method. As shown in FIG. 11A to FIG. 11C, when the power-sourcing equipment 200 is used as a DFP, the device identification method may include the following steps.

S1100: The power-sourcing equipment 200 turns on a power supply Vc.

The power supply Vc of the power-sourcing equipment 200 may be the power supply Vc824 shown in FIG. 8, or may be the power supply Vc2 shown in FIG. 9. The following uses an example in which the power supply Vc turned on by the power-sourcing equipment 200 is the power supply Vc824 shown in FIG. 8 for description.

As shown in FIG. 8, the power-sourcing equipment 200 may turn on the power supply Vc824, and then power on the pin Vcon801 in the cable marker 305 via the pin CL823. After being powered on, the cable marker 305 can receive communication data sent by the powered device 100 or the power-sourcing equipment 200. For a format of the communication data sent when the powered device 100 or the power-sourcing equipment 200 communicates with the cable marker 305, refer to the descriptions in Table 1 and Table 2. Details are not described herein again.

It may be understood that, when the pin CL22 of the power-sourcing equipment 200 is connected to the cable marker 305, and the power-sourcing equipment 200 may directly supply power to the cable marker 305, the cable marker 305 may be referred to as a near-end cable marker of the power-sourcing equipment 200, or a near-end cable electronic marker, a near-end electronic marker, or the like. However, the power-sourcing equipment 200 cannot directly supply power to the cable marker 306. In this case, the cable marker 306 may be referred to as a far-end cable marker of the power-sourcing equipment 200, a far-end cable electronic marker, a far-end electronic marker, or the like.

S1101: The power-sourcing equipment 200 sends a message 21 to the cable marker 305, where the message 21 carries a device address 1.

S1102: The cable marker 305 receives the message 21.

The power-sourcing equipment 200 may send the message 21 to the cable marker 305. The message 21 may carry the device address 1. Because the device address of the cable marker 305 is the device address 1, the cable marker 305 can receive the message 21.

For example, the message 21 may be a ping message, and the device address 1 may be "000". The ping message carries the device address 1, namely, "000". The message 21 and the device address 1 are not specifically limited in embodiments of this application.

The power-sourcing equipment 200 may determine, by using the message 21, whether a cable marker with the device address 1 currently exists in the cable 300 and whether the cable marker can perform communication.

S1103: The cable marker 305 replies with an ACK to the power-sourcing equipment 200.

S1104: The power-sourcing equipment 200 receives the ACK.

After receiving the message 21, the cable marker 305 may reply with the ACK to the power-sourcing equipment 200. The power-sourcing equipment 200 may receive the ACK. After the power-sourcing equipment 200 receives the ACK, the power-sourcing equipment 200 may determine that the cable marker whose device address is the device address 1 exists in the cable 300 and that the cable marker can perform communication.

In a possible implementation, step S1103 and step S1104 may be optional steps, that is, after receiving the message 11 sent by the power-sourcing equipment 200, the cable marker 305 may not reply with the ACK to the power-sourcing equipment 200. In other words, the power-sourcing equipment 200 may not receive the ACK.

S1105: The power-sourcing equipment 200 sends a message 22, where the message 22 indicates the cable marker 305 to modify the device address.

The power-sourcing equipment 200 may send the message 22. The message 22 indicates the cable marker whose device address is the device address 1 to modify the device address from the device address 1 to a device address 2. The message 22 may carry the device address 1 and the device address 2.

For example, the message 22 may be an instruction modify_marker_ID, the device address 1 may be "000", and the device address 2 may be "011". The instruction modify_marker_ID carries a default device address of the cable marker, for example, "000". Then, the instruction modify_marker_ID instructs the cable marker whose device address is "000" to modify the device address from "000" to "011".

It may be understood that specific content of the message 22, and the device address 1 and the device address 2 are not limited in embodiments of this application.

S1106: The cable marker 305 receives the message 22, and modifies the device address 1 to the device address 2 based on the message 22.

After receiving the message 22, the cable marker 305 may modify the device address 1 to the device address 2.

It may be understood that because only the cable marker 305 is powered on currently, and the cable marker 306 is not powered on, the message 22 sent by the power-sourcing equipment 200 can be received only by the cable marker 305.

S1107: The cable marker 305 sends a message 23 to the power-sourcing equipment 200, where the message 23 indicates that device address modification has been finished.

After finishing the device address modification, the cable marker 305 may send the message 23 to the power-sourcing equipment 200. The message 23 may indicate that the device address of the cable marker 305 has been modified. For example, the message 23 may be a message modify_finish. Specific content of the message 23 is not limited in embodiments of this application.

In a possible implementation, step S1105 may be an optional step. In other words, the cable marker 305 may not perform step S1105.

S1108: The power-sourcing equipment 200 receives the message 23, and sends a message 24, where the message 24 carries the device address 2.

S1109: The cable marker 305 receives the message 24.

The power-sourcing equipment 200 may send the message 24 to the cable marker 305. The message 24 may carry the device address 2. Because the device address of the cable marker 305 has been modified to the device address 2, the cable marker 305 can receive the message 24 carrying the device address 2. The message 24 may be used to determine whether the device address of the cable marker 305 has been modified to the device address 2, and determine whether the cable marker 305 can perform communication.

For example, the message 24 may be a ping message carrying the device address 2. Specific content of the message 24 is not limited in embodiments of this application.

S1110: The cable marker 305 replies with an ACK to the power-sourcing equipment 200.

S1111: The power-sourcing equipment 200 receives the ACK.

After receiving the message 24, the cable marker 305 may reply with the ACK to the power-sourcing equipment 200. The power-sourcing equipment 200 may receive the ACK replied with by the cable marker 305. After the power-sourcing equipment 200 receives the ACK, the power-sourcing equipment 200 may determine that the device address of the cable marker 305 is the device address 2 and that the cable marker 305 can perform communication.

In a possible implementation, step S1110 and step S1111 may be optional steps. In other words, the cable marker 305 may not perform step S1107. The power-sourcing equipment 200 may not perform step S1111.

S1112: The power-sourcing equipment 200 sends a message 25 to the powered device 100.

The power-sourcing equipment 200 may send the message 25 to the powered device 100. The message 25 may indicate the powered device 100 to turn on a power supply Vc, to power on the cable marker 306. For example, the message 25 may be an instruction power_marker. The message 25 is not specifically limited in embodiments of this application.

In an implementation, the message 25 may carry a device address of the powered device 100. For example, the device address of the powered device 100 may be "010".

S1113: The powered device 100 receives the message 25.

S1114: The powered device 100 sends a message 26 to the powered device 200.

S1115: The power-sourcing equipment 200 receives the message 26.

After receiving the message 25, the powered device 100 may send the message 26 to the power-sourcing equipment 200. The message 26 may indicate that the powered device 100 receives and supports the instruction 1. In other words, the powered device 100 supports turning on the power supply Vc and supplying power to the cable marker 306.

For example, the message 26 may be an accept message. Specific content of the message 26 is not limited in embodiments of this application.

In a possible implementation, step S1114 and step S1115 may be optional steps. In other words, the powered device 100 may not perform step S1114, but directly perform the following step S1116. The power-sourcing equipment 200 may not perform step S1115.

S1116: The powered device 100 turns on a power supply Vc.

The power supply Vc turned on by the powered device 100 may be the power supply Vc814 shown in FIG. 8, or may be the power supply Vc3 shown in FIG. 9. The following uses an example in which the power supply Vc turned on by the powered device 100 is the power supply Vc814 shown in FIG. 8 for description.

As shown in FIG. 8, the powered device 100 may turn on the power supply Vc814, and then power on the pin Vcon803 in the cable marker 306 via the pin CL813. After being powered on, the cable marker 306 can receive communication data sent by the powered device 100 or the power-sourcing equipment 200. For a format of the communication data sent when the powered device 100 or the power-sourcing equipment 200 communicates with the cable marker 306, refer to the descriptions in Table 1 and Table 2. Details are not described herein again.

S1117: The powered device 100 sends a message 27 to the power-sourcing equipment 200, where the message 27 indicates that power-on is completed.

S1118: The power-sourcing equipment 200 receives the message 27.

The powered device 100 may send the message 27 to the power-sourcing equipment 200. The message 27 may indicate that power-on is completed, that is, indicate that the powered device 100 has turned on the power supply Vc and powered on the cable marker 306. For example, the message 272 may be an instruction PS_RDY. The message 27 is not specifically limited in embodiments of this application.

The power-sourcing equipment 200 may receive the message 27.

In a possible implementation, step S1117 and step S1118 are optional steps. In other words, the powered device 100 may not perform step S1117. The power-sourcing equipment 200 may not perform step S1118.

S1119: The power-sourcing equipment 200 sends a message 28 to the cable marker 306, where the message 28 carries the device address 1.

S1120: The cable marker 306 receives the message 28.

The power-sourcing equipment 200 may send the message 28 to the cable marker 306. The message 28 carries the device address 1. It may be understood that, the device address of the cable marker 305 has been modified to the device address 2, and the device address of the cable marker 306 is still the device address 1. Therefore, when the power-sourcing equipment 200 sends the message carrying the device address 1, the cable marker 306 may receive the message 28 carrying the device address 1. The power-sourcing equipment 200 may determine, by using the message 28, whether a current device address of the cable marker 306 is the device address 1 and whether the cable marker 306 can perform communication.

For example, the message 28 may be a ping message carrying the device address 1. Specific content of the message 28 is not limited in embodiments of this application.

S1121: The cable marker 306 replies with an ACK to the power-sourcing equipment 200.

S1122: The power-sourcing equipment receives the ACK.

After receiving the message 28, the cable marker 306 may reply with the ACK to the power-sourcing equipment 200. The power-sourcing equipment 200 may receive the ACK. After receiving the ACK, the power-sourcing equipment 200 may determine that the cable marker 306 can perform communication.

In a possible implementation, step S1121 and step S1122 may be optional steps, that is, after receiving the message 26 sent by the power-sourcing equipment 200, the cable marker 306 may not reply with the ACK to the power-sourcing equipment 200. The power-sourcing equipment 200 may not accept the ACK.

S1123: The power-sourcing equipment 200 sends a message 29 to the cable marker 306, where the message 29 indicates the cable marker 306 to modify the device address.

The power-sourcing equipment 200 may send the message 29 to the cable marker 306. The message 29 indicates the cable marker 306 to modify the device address from the device address 1 to a device address 3. The message 29 may carry the device address 1 and the device address 3.

For example, the message 29 may be an instruction modify_marker_ID carrying the device address 1 and the device address 3. The device address 1 may be "000", and the device address 3 may be "100". The instruction modify_marker_ID carries the current device address of the cable marker 306, for example, "000". Then, the instruction modify_marker_ID instructs the cable marker 306 to modify the device address from "000" to "100".

It may be understood that specific content of the message 27 and the device address 3 are not limited in embodiments of this application.

S1124: The cable marker 306 receives the message 29, and modifies the device address 1 to the device address 3 based on the message 29.

After receiving the message 29, the cable marker 306 may modify the device address 1 to the device address 3.

S1125: The cable marker 306 sends a message 30 to the power-sourcing equipment 200, where the message 30 indicates that device address modification has been finished.

S1126: The power-sourcing equipment 200 receives the message 30.

After finishing the device address modification, the cable marker 306 may send the message 30 to the power-sourcing equipment 200. The message 30 may indicate that the device address of the cable marker 306 has been modified. The power-sourcing equipment 200 may receive the message 30. For example, the message 30 may be a message modify_finish. Specific content of the message 30 is not limited in embodiments of this application.

In a possible implementation, step S1124 and step S1125 may be optional steps. In other words, the cable marker 306 may not perform step S1124. The power-sourcing equipment 200 may not perform step S1125.

S1127: The power-sourcing equipment 200 sends a message 31 to the cable marker 306, where the message 31 carries the device address 3.

S1128: The cable marker 306 receives the message 31.

The power-sourcing equipment 200 may send the message 31 to the cable marker 306. The message 31 may carry the device address 3. Because the device address of the cable marker 306 has been modified to the device address 3, the cable marker 306 can receive the message 31. The message 31 may be used to determine whether the device address of the cable marker 306 has been modified to the device address 3 and whether the cable marker 306 can perform communication.

For example, the message 31 may be a ping message carrying the device address 3. The message 31 is not specifically limited in embodiments of this application.

S1129: The cable marker 306 replies with an ACK to the power-sourcing equipment 200.

S1130: The power-sourcing equipment 200 receives the ACK.

After receiving the message 31, the cable marker 306 may reply with the ACK to the power-sourcing equipment 200. The power-sourcing equipment 200 may receive the ACK. After receiving the ACK, the power-sourcing equipment 200 may determine that the cable marker 306 can perform communication.

In a possible implementation, step S1129 and step S1130 may be optional steps. In other words, the cable marker 306 may not perform step S1129. The power-sourcing equipment 200 may not perform step S1130.

In this way, according to the device identification method provided in this embodiment of this application, after the powered device 100 is successfully connected to the cable 300 and the power-sourcing equipment 200, the power-sourcing equipment 200 can correctly identify the two cable markers in the cable. The power-sourcing equipment 200 indicates that the device address of the cable marker 306 and the device address of the cable marker 305 are modified differently. Therefore, the power-sourcing equipment 200 can distinguish between, based on the device addresses, a message sent to the cable marker 305 and a message sent to the cable marker 306. The power-sourcing equipment 200 can identify, based on the device addresses, a message sent by the cable marker 306 and a message sent by the cable marker 305 in received messages. For example, the message sent by the power-sourcing equipment 200 to the cable marker 306 carries the device address 2. The message sent by the power-sourcing equipment 200 to the cable marker 305 carries the device address 3.

In addition, the power-sourcing equipment 200 can correctly identify the two cable markers in the cable. The power-sourcing equipment 200 may obtain information about the two cable markers in the cable 300 by using an instruction, so that functions such as real-time detection of a temperature of the cable 300 and communication signal enhancement of the cable 300 can be implemented.

In addition, in the cable 300 shown in FIG. 9, no additional connection line is required in the cable marker 305 and the cable marker 306. This can reduce costs of the cable, and reduce design complexity of the cable marker in the cable.

Specific content included in the message 21 to the message 31 and specific formats of the message 21 to the message 31 are not limited in embodiments of this application.

In a possible implementation, the power-sourcing equipment 200 may indicate only the cable marker 305 to modify the device address without indicating the cable marker 306 to modify the device address. In other words, the powered device 100, the power-sourcing equipment 200, the cable marker 305, and the cable marker 306 may perform only the foregoing steps S1100 to S1113, and do not perform the foregoing steps S1114 to S1118. In this way, according to the device identification method, after being successfully connected to the cable 300 and the power-sourcing equipment 200, the powered device 100 can correctly identify the two cable markers in the cable. The device address of the cable marker 306 is modified to the device address 2, and the device address of the cable marker 305 is still the default device address 1. The device addresses of the cable marker 306 and the cable marker 305 are different. Therefore, the power-sourcing equipment 200 can distinguish between, based on the device addresses, the message sent to the cable marker 306 and the message sent to the cable marker 306. The power-sourcing equipment 200 can identify, based on the device addresses, the message sent by the cable marker 306 and the message sent by the cable marker 305 in the received messages.

It should be noted that a sequence of the steps of the device identification method provided in embodiments of this application may be appropriately adjusted, and the steps may be correspondingly added or deleted depending on a situation. All variant methods readily figured out by a person skilled in the art within the technical scope disclosed in this application shall fall within the protection scope of this application. Therefore, details are not described again.

It may be understood that the device identification method provided in embodiments of this application is not limited to being applied to power-sourcing equipment and a powered device, and the method may be applied to any two electronic devices that are connected to each other through a cable (and the cable has two cable markers).

The following describes an example electronic device 1200 provided in an embodiment of this application.

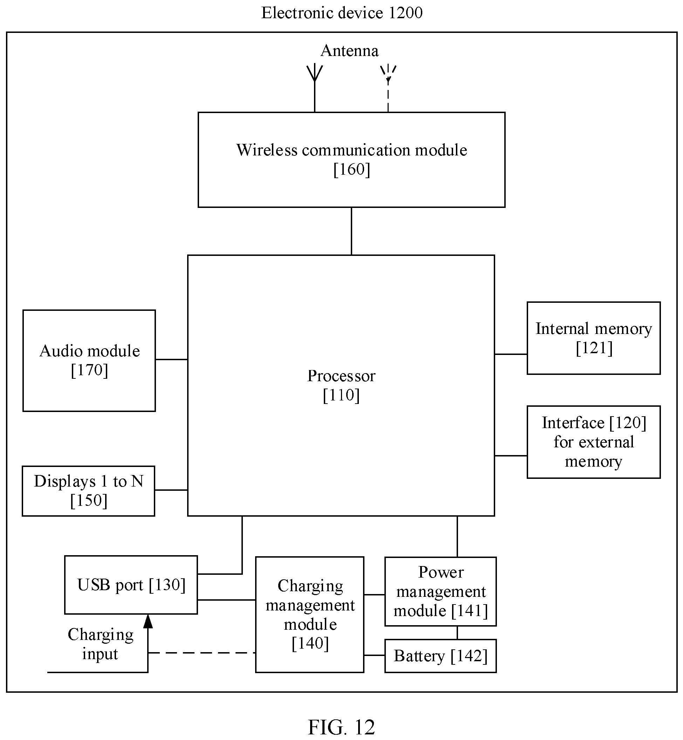

FIG. 12 is a diagram of a structure of the electronic device 1200 according to an embodiment of this application.

The following uses the electronic device 1200 as an example to describe the embodiment in detail. It should be understood that the electronic device 1200 may have more or fewer components than those shown in the figure, may combine two or more components, or may have different component configurations. Various components shown in the figure may be implemented in hardware including one or more signal processing and/or application-specific integrated circuits, in software, or in a combination of hardware and software.

The electronic device 1200 may include a processor 110, an interface 120 for external memory, an internal memory 121, a universal serial bus (universal serial bus, USB) port 130, a charging management module 140, a power management module 141, a battery 142, an antenna, a display 150, a wireless communication module 160, an audio module 170, and the like.

It may be understood that the structure shown in this embodiment of the present invention does not constitute a specific limitation on the electronic device 1200. In some other embodiments of this application, the electronic device 1200 may include more or fewer components than those shown in the figure, or combine some of the components, or split some of the components, or have different layouts of the components. The components shown in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent components, or may be integrated into one or more processors.

The controller may be a nerve center and a command center of the electronic device 1200. The controller may generate an operation control signal based on an instruction operation code and a time sequence signal, to control instruction reading and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) port, and/or the like.

The I2C interface is a two-way synchronous serial bus, and includes a serial data line (serial data line, SDA) and a serial clock line (derail clock line, SCL).

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to peripheral components such as the display 150. The MIPI interface includes a display serial interface (display serial interface, DSI). The processor 110 communicates with the display 150 via the DSI interface, to implement a display function of the electronic device 1200.

The GPIO interface may be configured by using software. The GPIO interface may be configured as a control signal or a data signal. In some embodiments, the GPIO interface may be configured to connect the processor 110 to the display 150, the wireless communication module 160, the audio module 170, and the like. The GPIO interface may alternatively be configured as an I2C interface, an I2S interface, a UART interface, an MIPI interface, or the like.

The USB port 130 is an interface that conforms to a USB standard specification, and may be specifically a mini USB port, a micro USB port, a USB type-C port, or the like. The USB port 130 may be configured to connect to a charger to charge the electronic device 1200, or may be configured to transmit data between the electronic device 1200 and a peripheral device, or may be configured to connect to a headset for playing audio through the headset. The port may alternatively be configured to connect to another electronic device, for example, an AR device.

In this embodiment of this application, the USB port 130 may be configured to connect to a cable. For example, the USB port 130 may have a pin GND821, a pin CL822, and a pin CL823 shown in FIG. 8, or the USB port 130 may have a pin GND811, a pin CL812, a pin CL813, and the like shown in FIG. 8. A circuit structure of the USB port 130 is not limited in embodiments of this application.

It may be understood that an interface connection relationship between the modules shown in this embodiment of the present invention is merely an example for description, but does not constitute a limitation on a structure of the electronic device 1200. In some other embodiments of this application, the electronic device 1200 may alternatively use an interface connection manner different from that in the foregoing embodiment, or a combination of a plurality of interface connection manners.

The charging management module 140 is configured to receive a charging input from a charger. The charger may be a wireless charger or a wired charger.

The power management module 141 is configured to connect the battery 142 and the charging management module 140 to the processor 110. The power management module 141 receives an input from the battery 142 and/or the charging management module 140, to supply power to the processor 110, the internal memory 121, an external memory, the display 150, a camera 193, the wireless communication module 160, and the like.

A wireless communication function of the electronic device 1200 may be implemented by the antenna, the wireless communication module 160, the modem processor, the baseband processor, and the like.

The antenna is configured to transmit and receive electromagnetic wave signals. The antenna in the electronic device 1200 may be configured to cover one or more communication frequency bands. Different antennas may be further reused, to improve antenna utilization.

The wireless communication module 160 may provide a solution, applied to the electronic device 1200, to wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), an infrared (infrared, IR) technology, or the like. The wireless communication module 160 may be one or more components integrating at least one communication processing module. The wireless communication module 160 receives an electromagnetic wave through the antenna, performs frequency modulation and filtering processing on the electromagnetic wave signal, and sends a processed signal to the processor 110. The wireless communication module 160 may further receive a to-be-sent signal from the processor 110, perform frequency modulation and amplification on the signal, and convert a processed signal into an electromagnetic wave for radiation through the antenna.

In some embodiments, the antenna of the electronic device 1200 is coupled to the wireless communication module 160, so that the electronic device 1200 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 1200 implements a display function by using the GPU, the display 150, the application processor, and the like. The GPU is a microprocessor for image processing, and is connected to the display 150 and the application processor. The GPU is configured to: perform mathematical and geometric computation, and render an image. The processor 110 may include one or more GPUs that execute program instructions to generate or change display information.

The display 150 is configured to display an image, a video, and the like. The display 150 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), and the like. In some embodiments, the electronic device 1200 may include one or N displays 150, where N is a positive integer greater than 1.

The interface 120 for external memory may be configured to connect to an external memory card, for example, a micro SD card, to extend a storage capability of the electronic device 1200. The external memory card communicates with the processor 110 through the interface 120 for external memory, to implement a data storage function. For example, files such as music and videos are stored in the external memory card.

The internal memory 121 may be configured to store computer-executable program code, and the executable program code includes instructions. The processor 110 runs the instructions stored in the internal memory 121, to perform various function applications and data processing of the electronic device 1200. The internal memory 121 may include a program storage area and a data storage area. The program storage area may store an operating system and an application required by at least one function (for example, a facial recognition function, a fingerprint recognition function, and a mobile payment function). The data storage area may store data (for example, facial information template data or fingerprint information template) created during use of the electronic device 1200, and the like. In addition, the internal memory 121 may include a high-speed random access memory, or may include a non-volatile memory such as at least one magnetic disk storage device, a flash memory, or a universal flash storage (universal flash storage, UFS).

The electronic device 1200 may implement an audio function by using the audio module 170, the application processor, and the like, for example, music playing and recording.

The audio module 170 is configured to convert digital audio information into an analog audio signal for output, and is also configured to convert an analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The electronic device 1200 may be the power-sourcing equipment 200, or may be the powered device 100. This is not limited in embodiments of this application.

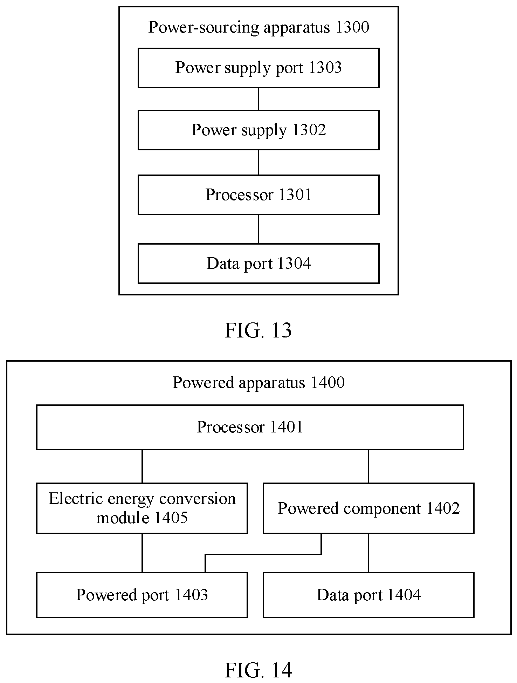

FIG. 13 illustrates a power-sourcing apparatus 1300. As shown in FIG. 13, the power-sourcing apparatus 1300 may include a processor 1301, a power supply 1302, a plurality of power supply ports 1303, and a plurality of data ports 1304. A plurality of powered devices may be respectively connected to the plurality of power supply ports 1303 of the power-sourcing apparatus 1300 through a plurality of power supply cables. The plurality of powered devices may be respectively connected to the plurality of data ports 1304 through a plurality of data cables. A data signal is transmitted between the power-sourcing apparatus 1300 and the powered device through the data cable. The power-sourcing apparatus 1300 may supply power to the powered device through the power supply cable.

Optionally, the power supply port 1303 and the data port 1304 may be combined into a same port, that is, the power-sourcing apparatus 1300 may transmit data to the powered device through the port, and may supply power to the powered device through the port.

The processor 1301 may be configured to send, to a cable marker in a cable through the data port 1304 or through the port formed by combining the data port 1304 and the power supply port 1303, an instruction used to modify a device address.

The power supply 1302 may be configured to: supply power to the plurality of powered devices, and supply power to the cable marker in the cable. Specifically, the power supply 1302 in the power-sourcing apparatus 1300 may supply power to the powered device through the power supply port 1303 or through the port formed by combining the data port 1304 and the power supply port 1303.

The power-sourcing apparatus 1300 may be configured to perform the device identification method performed by the power-sourcing equipment 200.

The power-sourcing apparatus 1300 may include more or fewer components than those shown in the figure. This is not limited in this application. A name of a component included in the power-sourcing apparatus 1300 is not limited in embodiments of this application.

FIG. 14 illustrates a powered apparatus 1400. As shown in FIG. 14, the powered apparatus 1400 may include a processor 1401, a powered component 1402, a powered port 1403, a data port 1404, and a power conversion module 1405. The powered port 1403 may be connected to power-sourcing equipment through a cable, to receive power supplied by the power-sourcing equipment. The data port 1404 may be connected to the power-sourcing equipment through a cable, and data is transmitted between the data port 1404 and the power-sourcing equipment through the cable.

Optionally, the powered port 1403 and the data port 1404 may be combined into a same port. To be specific, the powered apparatus 1400 may receive power through the port, and may further transmit data through the port.

The processor 1401 may be configured to send, to a cable marker in a cable through the data port 1404 or through the port formed by combining the data port 1404 and the powered port 1403, an instruction used to modify a device address.

The powered component 1402 may be configured to receive power supplied by the power-sourcing equipment through the powered port 1403. The powered component 1402 may be a component that needs to be powered in the powered apparatus 1400, for example, a wireless local area network module. This is not limited in embodiments of this application.

The power conversion module 1405 may convert electric energy input by the power-sourcing equipment to the powered port 1403 into a power supply of the powered apparatus. In this way, the power supply can be input to the cable marker through the powered port 1403, to supply power to the cable marker.

The powered apparatus 1400 may be configured to perform the device identification method performed by the powered device 100.

The powered apparatus 1400 may include more or fewer components than those shown in the figure. This is not limited in this application. A name of a component included in the powered apparatus 1400 is not limited in embodiments of this application.

An embodiment of this application further provides a chip system, including a processor. The processor is coupled to a memory, and the memory is configured to store a program or instructions. When the program or the instructions is/are executed by the processor, the chip system is enabled to implement the method according to any one of the foregoing method embodiments.

In some examples, there may be one or more processors in the chip system. The processor may be implemented by using hardware, or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

In some examples, there may also be one or more memories in the chip system. The memory may be integrated with the processor, or may be disposed separately from the processor. This is not limited in embodiments of this application. For example, the memory may be a non-transitory processor, for example, a read-only memory ROM. The memory and the processor may be integrated into a same chip, or may be separately disposed on different chips. A type of the memory and a manner of disposing the memory and the processor are not specifically limited in embodiments of this application.

For example, the chip system may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processor (digital signal processor, DSP), a micro controller unit (micro controller unit, MCU), a programmable controller (programmable logic device, PLD), or another integrated chip.

It should be understood that the steps in the foregoing method embodiments may be completed by using an integrated logic circuit of hardware in the processor or instructions in a form of software. The steps of the methods disclosed with reference to embodiments of this application may be directly performed and completed by a hardware processor, or may be performed and completed by using a combination of hardware and a software module in the processor.

An embodiment of this application further provides a computer-readable storage medium. The computer-readable storage medium stores a computer program. When the computer program runs on a computer, the computer is enabled to perform the foregoing related steps, to implement the layer synthesis method in the foregoing embodiments.

An embodiment of this application further provides a computer program product. When the computer program product runs on a computer, the computer is enabled to perform the foregoing related steps, to implement the layer synthesis method in the foregoing embodiments.

In addition, an embodiment of this application further provides an apparatus. The apparatus may be specifically a component or a module, and the apparatus may include one or more processors and memories that are connected to each other. The memory is configured to store a computer program. When the computer program is executed by the one or more processors, the apparatus is enabled to perform the layer synthesis method in the foregoing method embodiments.

The apparatus, the computer-readable storage medium, the computer program product, or the chip provided in embodiments of this application is configured to perform the corresponding method provided above. Therefore, for beneficial effect that can be achieved, refer to beneficial effect in the corresponding method provided above. Details are not described herein again.

Methods or algorithm steps described in combination with the content disclosed in embodiments of this application may be implemented by using hardware, or may be implemented by a processor by executing software instructions. The software instructions may include a corresponding software module. The software module may be stored in a random access memory (random access memory, RAM), a flash memory, a read-only memory (read-only memory, ROM), an erasable programmable read-only memory (erasable programmable ROM, EPROM), an electrically erasable programmable read-only memory (electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and write information into the storage medium. Certainly, the storage medium may be a component of the processor. The processor and the storage medium may be located in an application-specific integrated circuit (application-specific integrated circuit, ASIC).

In conclusion, the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof. These modifications or replacements do not cause the essence of the corresponding technical solutions to depart from the scope of the technical solutions of embodiments of this application.

According to the context, the term "when" used in the foregoing embodiments may be interpreted as a meaning of "if", "after", "in response to determining", or "in response to detecting". Similarly, according to the context, the phrase "when it is determined that..." or "if (a stated condition or event) is detected" may be interpreted as a meaning of "if it is determined that...", "in response to determining...", "when (a stated condition or event) is detected", or "in response to detecting (a stated condition or event)".

All or a part of the foregoing embodiments may be implemented by using software, hardware, firmware, or any combination thereof. When software is used to implement embodiments, all or a part of embodiments may be implemented in a form of computer program product. The computer program product includes one or more computer instructions. When the computer program instructions are loaded and executed on a computer, all or a part of the procedures or functions according to embodiments of this application are generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

A person of ordinary skill in the art may understand that all or a part of the procedures of the methods in embodiments may be implemented by a computer program instructing related hardware. The program may be stored in a computer-readable storage medium. When the program is executed, the procedures of the methods in embodiments are performed. The foregoing storage medium includes any medium that can store program code, such as a ROM, a random access memory RAM, a magnetic disk, or an optical disc.

## Claims

1. A device identification method, applied to a first device, wherein the first device comprises a first power supply, and the method comprises:
turning on the first power supply, wherein the first power supply is configured to supply power to a first electronic marker of a cable, and an address of the first electronic marker is a first address;
sending first information, wherein the first information comprises the first address and a second address, and the first information indicates the first electronic marker to modify the address of the first electronic marker from the first address to the second address;
sending third information to a second device, wherein the third information indicates the second device to supply power to a second electronic marker of the cable, and an address of the second electronic marker is the first address;
sending fifth information, wherein the fifth information comprises the first address, and the fifth information is used to determine whether communication with the second electronic marker can be performed; and
receiving sixth information, wherein the sixth information indicates that communication with the second electronic marker can be performed.

2. The method according to claim 1, wherein after the receiving the sixth information, the method further comprises:
sending seventh information, wherein the seventh information comprises the first address and a third address, and the seventh information indicates the second electronic marker to modify the address of the second electronic marker from the first address to the third address; and
receiving eighth information, wherein the eighth information indicates that the address of the second electronic marker has been modified to the third address.

3. The method according to claim 1 or 2, wherein the first device is power-sourcing equipment or a powered device.

4. The method according to claim 3, wherein that the third information indicates the second device to supply power to the second electronic marker of the cable comprises:
the third information indicates the second device to turn on a second power supply.

5. The method according to claim 4, wherein the first electronic marker and the second electronic marker are in the cable, and the cable is configured to connect the first device to the second device.

6. The method according to claim 5, wherein after the receiving a second message, the method further comprises:
sending a ninth message, wherein the ninth message comprises the second address, and the ninth message is used to determine whether communication with the first electronic marker can be performed; and
receiving a tenth message, wherein the tenth message indicates that communication with the first electronic marker can be performed.

7. The method according to claim 2, wherein after the receiving an eighth message, the method further comprises:
sending an eleventh message, wherein the eleventh message comprises the third address, and the eleventh message is used to determine whether communication with the second electronic marker can be performed; and
receiving a twelfth message, wherein the twelfth message indicates that communication with the second electronic marker can be performed.

8. The method according to any one of claims 4 to 7, wherein after the turning on the first power supply, the method further comprises:
sending a thirteenth message, wherein the thirteenth message comprises the first address, and the thirteenth message is used to determine whether communication with the first electronic marker can be performed; and
receiving a fourteenth message, wherein the fourteenth message indicates that communication with the first electronic marker can be performed.

9. The method according to claim 8, wherein before the receiving fourth information, the method further comprises:
receiving a fifteenth message, wherein the fifteenth message indicates that the second device agrees to supply power to the second electronic marker.

10. The method according to any one of claims 1 to 9, wherein after the sending the first information, the method further comprises:
receiving second information, wherein the second information indicates that the address of the first electronic marker has been modified to the second address.

11. The method according to any one of claims 1 to 10, wherein after the sending the third information to the second device, the method further comprises:
receiving the fourth information, wherein the fourth information indicates that the second device has supplied power to the second electronic marker.

12. A device identification system, wherein the system comprises:
a first device, a second device, and a third device, wherein the first device and the second device are connected to each other via the third device, and the third device comprises a first electronic marker and a second electronic marker;
the first device is configured to turn on a first power supply, wherein the first power supply is configured to supply power to the first electronic marker, and an address of the first electronic marker is a first address;
the first device is further configured to send first information, wherein the first information comprises the first address and a second address, and the first information indicates the first electronic marker to modify the address of the first electronic marker from the first address to the second address;
the first electronic marker is configured to: receive the first information, and modify the address of the first electronic marker from the first address to the second address;
the first device is configured to send third information to the second device, wherein the third information indicates the second device to supply power to the second electronic marker, and an address of the second electronic marker is the first address;
the second device is configured to receive the third information;
the second device is configured to turn on a second power supply, wherein the second power supply is configured to supply power to the second electronic marker, and the address of the second electronic marker is the first address;
the first device is configured to send fifth information, wherein the fifth message comprises the first address, and the fifth information is used to determine whether communication with the second electronic marker can be performed;
the second electronic marker is configured to: receive the fifth information, and send sixth information, wherein the sixth information indicates that communication with the second electronic marker can be performed; and
the first device is configured to receive the sixth information.

13. The system according to claim 12, wherein
the first device is configured to: send seventh information after receiving the fourth message or after receiving the sixth message, wherein the seventh information comprises the first address and a third address, and the seventh information indicates the second electronic marker to modify the address of the second electronic marker from the first address to the third address;
the second electronic marker is configured to: receive the seventh information, and modify the address of the second electronic marker from the first address to the third address;
the second electronic marker is configured to send eighth information, wherein the eighth information indicates that the address of the second electronic marker has been modified to the third address; and
the first device is configured to receive the eighth information.

14. The system according to claim 12 or 13, wherein
the first device is a powered device, the second device is power-sourcing equipment, and the third device is a cable; or the first device is power-sourcing equipment, the second device is a powered device, and the third device is a cable.

15. The system according to claim 14, wherein the first electronic marker comprises a first power supply pin and a first configuration channel pin; and that the first power supply is configured to supply power to the first electronic marker specifically comprises:
the first power supply is configured to supply power to the first electronic marker via the first power supply pin; and
the first electronic marker is configured to receive the first information via the first configuration channel pin.

16. The system according to claim 15, wherein the second electronic marker comprises a second power supply pin and a second configuration channel pin; and that the second power supply is configured to supply power to the second electronic marker specifically comprises:
the second power supply is configured to supply power to the second electronic marker via the second power supply pin; and
the second electronic marker is configured to receive the fifth information via the second configuration channel pin.

17. The system according to claim 16, wherein
the first device is configured to send a ninth message after receiving the second message, wherein the ninth message comprises the second address, and the ninth message is used to determine whether communication with the first electronic marker can be performed;
the first electronic marker is configured to: receive the ninth message, and send a tenth message, wherein the tenth message indicates that communication with the first electronic marker can be performed; and
the first device is configured to receive the tenth message.

18. The system according to claim 17, wherein
the first device is configured to: send an eleventh message after receiving the eighth message, wherein the eleventh message comprises the third address, and the eleventh message is used to determine whether communication with the second electronic marker can be performed;
the second electronic marker is configured to: receive the eleventh message, and send a twelfth message, wherein the twelfth message indicates that communication with the second electronic marker can be performed; and
the first device is configured to receive the twelfth message.

19. The system according to any one of claims 15 to 17, wherein
the first device is configured to: send a thirteenth message after turning on the first power supply, wherein the thirteenth message comprises the first address, and the thirteenth message is used to determine whether communication with the first electronic marker can be performed; and
the first electronic marker is configured to: receive the thirteenth message, and send a fourteenth message, wherein the fourteenth message indicates that communication with the first electronic marker can be performed.

20. The system according to claim 19, wherein
the second device is configured to: send a fifteenth message before sending the fourth message, wherein the fifteenth message indicates that the second device agrees to supply power to the second electronic marker; and
the first device is configured to receive the fifteenth message.

21. The system according to any one of claims 12 to 20, wherein
the first electronic marker is configured to: send second information after receiving the first information, wherein the second information indicates that the address of the first electronic marker has been modified to the second address; and
the first device is configured to receive the second information.

22. The system according to any one of claims 12 to 21, wherein
the second device is configured to: send fourth information after turning on the second power supply, wherein the fourth information indicates that the second device has turned on the second power supply; and
the first device is configured to receive the fourth information.

23. An electronic device, comprising: a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 11.

24. A chip system, wherein the chip system is applied to an electronic device, the chip system comprises one or more processors, and the processor is configured to invoke computer instructions to perform the method according to any one of claims 1 to 11.

25. A computer-readable storage medium, wherein the computer-readable storage medium comprises a computer program, and when the computer program runs on an electronic device, the electronic device is enabled to perform the method according to any one of claims 1 to 11.

26. A computer program product, wherein when the computer program product runs on a computer, the electronic device is enabled to perform the method according to any one of claims 1 to 11.
